(19) Europäisches Patentamt / European Patent Office / Office européen des brevets

(11) **EP 2 546 948 A1**

## (12) EUROPEAN PATENT APPLICATION
published in accordance with Art. 153(4) EPC

(43) Date of publication:
**16.01.2013 Bulletin 2013/03**

(21) Application number: **11753016.2**

(22) Date of filing: **04.03.2011**

(51) Int Cl.:
*H02J 7/00* (2006.01)  *B60L 11/18* (2006.01)
*H01M 10/48* (2006.01)  *H02J 7/10* (2006.01)

(86) International application number:
**PCT/JP2011/001287**

(87) International publication number:
**WO 2011/111350 (15.09.2011 Gazette 2011/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.03.2010  JP 2010050788**

(71) Applicant: **Sanyo Electric Co., Ltd.**
**Osaka 570-8677 (JP)**

(72) Inventors:
• **KIRIMOTO, Mika**
  **Moriguchi-City**
  **Osaka 570-8677 (JP)**

• **MURAO, Hiroya**
  **Moriguchi-City**
  **Osaka 570-8677 (JP)**
• **KATAOKA, Shinya**
  **Moriguchi-City**
  **Osaka 570-8677 (JP)**

(74) Representative: **Glawe, Delfs, Moll**
**Patent- und Rechtsanwälte**
**Rothenbaumchaussee 58**
**20148 Hamburg (DE)**

(54) **BATTERY CONTROL DEVICE, BATTERY SYSTEM, ELECTRIC VEHICLE, MOBILE BODY, ELECTRIC POWER STORAGE DEVICE, AND POWER SUPPLY DEVICE**

(57)  Each of battery modules is provided with a range determiner and a voltage detector. The range determiner is connected to a battery via a transmission line, and the voltage detector is connected to the battery via a communication line. In the battery, a voltage calculator calculates a terminal voltage of each of battery cells using a determination result of a voltage range of the battery cell by the range determiner. A control value calculator calculates a battery control value using one of a terminal voltage of each of the battery cells detected by the voltage detector and the terminal voltage of the battery cell calculated by the voltage calculator.

FIG. 1

EP 2 546 948 A1

**Description**

[Technical Field]

The present invention relates to a battery control device, and a battery system, an electric vehicle, a movable body, a power storage device, and a power supply device including the same.

[Background Art]

In movable bodies such as an electric automobile including a plurality of battery cells capable of charge and discharge, a battery control device for controlling charge and discharge of the battery cells is provided. The battery control device includes a voltage detector that detects a terminal voltage of the battery cell and a controller that performs various control operations based on the terminal voltage detected by the voltage detector (see, e.g., Patent Document 1). [Patent Document 1] JP 2000-173674 A

[Summary of Invention]

[Technical Problem]

In the above-mentioned battery control device, a configuration for detecting the terminal voltage of the battery cell becomes complicated.
An object of the present invention is to provide a battery control device capable of preventing the precision of charge/discharge control of a battery cell from decreasing while being prevented from becoming complex in configuration and increasing in cost, and a battery system, an electric vehicle, a movable body, a power storage device, and a power supply device including the same.

[Solution to Problem]

According to an aspect of the present invention, a battery control device for performing charge/discharge control of a plurality of battery cells includes a voltage detector that detects a terminal voltage of each of the plurality of battery cells, and a controller that is connected to the voltage detector via a communication line, in which the controller includes a voltage calculator that calculates, based on currents respectively flowing through the plurality of battery cells, a terminal voltage of each of the battery cells, and a control value calculator that calculates a control value for controlling charge or discharge of the plurality of battery cells using one of the terminal voltage detected by the voltage detector and the terminal voltage calculated by the voltage calculator.
In the battery control device, the terminal voltage detected by the voltage detector is fed to the controller via the communication line. In the controller, the voltage calculator calculates, based on the currents flowing through the plurality of battery cells, the terminal voltage of each of the battery cells. The control value calculator calculates the control value for controlling the charge/discharge of the plurality of battery cells using one of the terminal voltage detected by the voltage detector and the terminal voltage calculated by the voltage calculator.
In this case, one of the terminal voltage detected by the voltage detector and the terminal voltage calculated by the voltage calculator can be selectively used. Even when the terminal voltage detected by the voltage detector cannot be used because the communication line is disconnected, for example, the control value can be calculated using the terminal voltage calculated based on the currents flowing through the plurality of battery cells by the voltage calculator. As a result, the reliability of the battery control device can be improved.
The control value calculator may calculate the control value using the terminal voltage calculated by the voltage calculator when it cannot receive the terminal voltage detected by the voltage detector.
In this case, the control value calculator can calculate the control value using the terminal voltage detected by the voltage detector when it can receive the terminal voltage detected by the voltage detector. The control value calculator can reliably calculate the control value in a simple configuration using the terminal voltage calculated by the voltage calculator even when it cannot receive the terminal voltage detected by the voltage detector because the communication line is disconnected, for example.
According to another aspect of the present invention, a battery control device for performing charge/discharge control of a plurality of battery cells includes a voltage calculator that calculates, based on currents respectively flowing through the plurality of battery cells, a terminal voltage of each of the battery cells, and a control value calculator that calculates a control value for controlling charge/discharge of the plurality of battery cells using the terminal voltage calculated by the voltage calculator.
In the battery control device, the voltage calculator calculates, based on the currents flowing through the plurality of battery cells, the terminal voltage of each of the battery cells. The control value calculator calculates the control value for controlling the charge/discharge of the plurality of battery cells using the terminal voltage calculated by the voltage calculator.

Thus, the control value can be calculated, based on the currents flowing through the plurality of battery cells, using the terminal voltage of each of the battery cells calculated in a simple configuration without providing the battery control device with the voltage detector for detecting the terminal voltage of the battery cell. Therefore, the precision of the charge/discharge control of each of the battery cells can be prevented from decreasing while preventing the battery control device from becoming complex in configuration and increasing in cost.

The battery control device may further include a range determiner that determines whether the terminal voltage of each of the plurality of battery cells belongs to a predetermined voltage range, and the voltage calculator may correct the terminal voltage of each of the battery cells based on a result of the determination by the range determiner.

In this case, the calculated terminal voltage is corrected based on the result of the determination whether the voltage of each of the battery cells belongs to the predetermined voltage range. Thus, a more accurate terminal voltage of each of the battery cells can be obtained while preventing the battery control device from becoming complex in configuration and increasing in cost.

The range determiner may determine whether the terminal voltage of each of the battery cells belongs to the voltage range based on a comparison result between a reference voltage and the terminal voltage of the battery cell.

In this case, it can be determined whether the terminal voltage of each of the battery cells belongs to the voltage range by adding the reference voltage in an existing configuration used to compare an upper-limit voltage at which the battery cell is not overcharged or a lower-limit voltage at which the battery cell is not overdischarged with the terminal voltage of the battery cell, for example. Thus, the configuration of the battery control device can be prevented from becoming complex.

The range determiner may compare the upper-limit voltage at which each of the battery cells is not overcharged and the terminal voltage of the battery cell while comparing the lower-limit voltage at which the battery cell is not overdischarged and the terminal voltage of the battery cell, and the battery control device may further include a stop controller that controls the stop of the charge/discharge of the plurality of battery cells based on a comparison result by the range determiner.

In this case, each of the plurality of battery cells can be prevented from being overcharged and overdischarged by stopping the charge/discharge of the plurality of battery cells at the time point where the terminal voltage of at least one of the battery cells has reached the upper-limit voltage or the lower-limit voltage. Thus, the safety of each of the battery cells can be ensured.

The common range determiner can determine whether the terminal voltage of each of the battery cells belongs to a predetermined voltage range while determining whether the terminal voltage of at least one of the battery cells has reached the upper-limit voltage or the lower-limit voltage. Thus, each of the battery cells can be prevented from being deteriorated by being overcharged or overdischarged while preventing the battery control device from becoming complex in configuration and increasing in cost.

According to still another aspect of the present invention, a battery system includes a plurality of battery cells, and the above-mentioned battery control device for performing charge/discharge control of the plurality of battery cells.

In the battery system, the above-mentioned battery control device calculates the control value for performing charge/discharge control of the plurality of battery cells based on currents flowing through the plurality of battery cells. Thus, the reliability of the battery control device can be improved while preventing the battery control device from becoming complex in configuration and increasing in cost. Alternatively, the precision of the charge/discharge control of each of the battery cells can be prevented from decreasing while preventing the battery control device from becoming complex in configuration and increasing in cost.

According to still another aspect of the present invention, an electric vehicle includes a plurality of battery cells, the above-mentioned battery control device for performing charge/discharge control of the plurality of battery cells, a motor that is driven with electric power from the plurality of battery cells, and a drive wheel that rotates with a torque generated by the motor.

In the electric vehicle, the motor is driven with the electric power from the plurality of battery cells. The drive wheel rotates with the torque generated by the motor so that the electric vehicle moves.

The above-mentioned battery control device calculates the control value for controlling charge/discharge of the plurality of battery cells based on currents flowing through the plurality of battery cells. Thus, the reliability of the battery control device can be improved while preventing the battery control device from becoming complex in configuration and increasing in cost. Alternatively, the precision of the charge/discharge control of each of the battery cells can be prevented from decreasing while preventing the battery control device from becoming complex in configuration and increasing in cost. As a result, the traveling performance of the electric vehicle can be improved.

According to still another aspect of the present invention, a movable body includes the above-mentioned battery system, a main movable body, a power source that converts electric power from the battery system into drive power upon receipt of the electric power, and a driver that moves the main movable body with the drive power obtained in the conversion by the power source.

In the movable body, the power source converts the electric power from the above-mentioned battery system into the drive power, and the driver moves the main movable body with the drive power. In this case, the above-mentioned battery system is used so that the precision of the charge/discharge control of each of the battery cells can be prevented from decreasing while preventing the battery control device from becoming complex in configuration and increasing in cost.

According to still another aspect of the present invention, a power storage device includes the above-mentioned battery system, and a system controller that performs control relating to charge or discharge of the plurality of battery cells in the battery system.

In the power storage device, the system controller performs control relating to the charge or discharge of the plurality of battery cells. Thus, the plurality of battery cells can be prevented from being degraded, overcharged, and overdischarged.

The above-mentioned battery system is used so that the precision of the charge/discharge control of each of the battery cells can be prevented from decreasing while preventing the battery control device from becoming complex in configuration and increasing in cost.

According to still another aspect of the present invention, a power supply device connectable to an external object includes the above-mentioned power storage device, and a power conversion device that is controlled by the system controller in the power storage device and converts electric power between the plurality of battery cells in the power storage device and the external object.

In the power supply device, the power conversion device performs electric power conversion between the plurality of battery cells and the external object. The system controller in the power storage device controls the power conversion device so that control relating to the charge or discharge of the plurality of battery cells is performed. Thus, the plurality of battery cells can be prevented from being deteriorated, overdischarged, and overcharged.

The above-mentioned battery system is used so that the precision of the charge/discharge control of each of the battery cells can be prevented from decreasing while preventing the battery control device from becoming complex in configuration and increasing in cost.

[Advantageous Effects of Invention]

According to the present invention, the precision of charge/discharge control of each of battery cells can be prevented from decreasing while preventing a battery control device from becoming complex in configuration and increasing in cost.

[Brief Description of Drawings]

[FIG. 1] FIG. 1 is a block diagram illustrating a configuration of a battery control device according to a first embodiment and a battery system including the same.
[FIG. 2] FIG. 2 is a block diagram illustrating a configuration of a voltage detector.
[FIG. 3] FIG. 3 is a block diagram illustrating a configuration of a range determiner, a voltage calculator, and a current detector.
[FIG. 4] FIG. 4 is a flowchart illustrating voltage range determination processing performed by a determination controller.
[FIG. 5] FIG. 5 is a diagram illustrating a state of each switching element.
[FIG. 6] FIG. 6 is a diagram illustrating a relationship between a terminal voltage of a battery cell and a voltage range.
[FIG. 7] FIG. 7 is a diagram illustrating a relationship between a comparison result of a comparator and a voltage range.
[FIG. 8] FIG. 8 is a block diagram illustrating a configuration of an overcharge/overdischarge detector illustrated in Fig. 3.
[FIG. 9] FIG. 9 is a flowchart illustrating SOC calculation processing performed by a battery control device.
[FIG. 10] FIG. 10 is a flowchart illustrating SOC calculation processing performed by a battery control device.
[FIG. 11] FIG. 11 is a flowchart illustrating SOC calculation processing performed by a battery control device.
[FIG. 12] FIG. 12 illustrates a relationship between an SOC and an OCV of an i-th battery cell.
[FIG. 13] FIG. 13 is a flowchart illustrating battery control value calculation processing performed by a control value calculator.
[FIG. 14] FIG. 14 is a flowchart illustrating battery control value calculation processing performed by a control value calculator.

[FIG. 15] FIG. 15 is a block diagram illustrating a configuration of a battery control device according to a second embodiment and a battery system including the same.

[FIG. 16] FIG. 16 is a block diagram illustrating a configuration of a battery control device according to a third embodiment and a battery system including the same.

[FIG. 17] FIG. 17 is a block diagram illustrating a configuration of an electric automobile according to a fourth embodiment.

[FIG. 18] FIG. 18 is a block diagram illustrating a configuration of a power supply device according to a fifth embodiment.

[FIG. 19] FIG. 19 is a perspective view of a rack that houses a plurality of battery systems 500.

[FIG. 20] FIG. 20 is a diagram illustrating an arrangement example of a service plug.

[FIG. 21] FIG. 21 is a diagram illustrating another arrangement example of a service plug.

[Description of Embodiments]

The embodiments of the present invention will be described in detail referring to the drawings. The embodiments below describe a battery control device, a battery system, an electric vehicle, a movable body, a power storage device, and a power supply device. The battery control device according to the present embodiment is used as one of constituent elements of the battery system installed in an electric vehicle or a power supply device using electric power as a driving source. The electric vehicle includes a hybrid electric vehicle, a battery electric vehicle, and a plug-in hybrid electric vehicle. In the present embodiment, the electric vehicle is a hybrid electric vehicle.

In the following description, an amount of electric charges stored in a battery cell in a full charge state is referred to as a full charging capacity. An amount of electric charges stored in the battery cell in any state is referred to as a remaining capacity. Further, the ratio of the remaining capacity to the full charging capacity of the battery is referred to as a state of charge (SOC).

(1) First Embodiment

A battery control device and a battery system according to a first embodiment of the present invention will be described.

(1-1) Configuration of Battery Control Device and Battery System

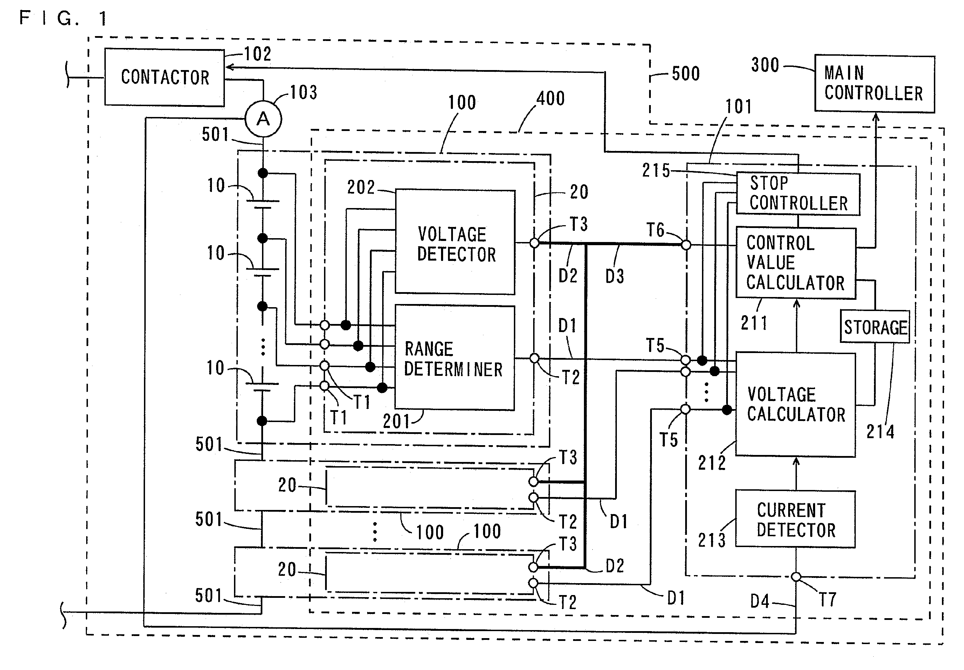

Fig. 1 is a block diagram illustrating a configuration of a battery control device according to a first embodiment and a battery system including the same. In the present embodiment, a battery system 500 includes a plurality of battery modules 100, a battery electronic control unit (hereinafter referred to as a battery ECU) 101, a contactor 102, and a current sensor 103, and is connected to a main controller 300 in an electric vehicle.

The plurality of battery modules 100 are connected to one another, respectively, via power supply lines 501. Each of the battery modules 100 includes a plurality of battery cells 10 and a detection unit 20. A secondary battery such as a lithium-ion battery is used as the battery cell 10. The plurality of battery cells 10 in each of the battery modules 100 are connected in series. The detection unit 20 includes a range determiner 201 and a voltage detector 202. A positive electrode terminal and a negative electrode terminal of each of the battery cells 10 are respectively connected to the range determiner 201 and the voltage detector 202 via terminals T1 of the detection unit 20. The range determiner 201 is connected to a terminal T2, and the voltage detector 202 is connected to a terminal T3. Details of the range determiner 201 and the voltage detector 202 will be described below.

Power supply lines 501 are respectively connected to the battery cells 10 arranged at both ends of each of the battery modules 100. Thus, all the battery cells 10 in each of the plurality of battery modules 100 are connected in series. The current sensor 103 and the contactor 102 are inserted into the power supply line 501 connected to the battery module 100 at one end. When the contactor 102 is turned off, no current flows through all the battery cells 10. The power supply line 501 connected to the battery module 100 at the one end and the power supply line 501 connected to the battery module 100 at the other end are connected to a load such as a motor of the electric vehicle.

The range determiner 201 and the voltage detector 202 in each of the detection units 20 are provided on a common circuit board. The battery ECU 101 is provided on another circuit board. One end of a transmission line D1 is connected to the terminal T2 of the detection unit 20 in each of the battery modules 100. The other end of the transmission line D1 is connected to each of terminals T5 of the battery ECU 101. One end of a communication line D2 is connected to the terminal T3 of the detection unit 20 in each of the battery modules 100. The other end of each of the plurality of communication lines D2 is connected to one end of a communication line D3. The other end of the communication line D3 is connected to a terminal T6 of the battery ECU 101. The terminal T3 of each of the detection units 20 may be cascade-connected to the terminal T6 of the battery ECU 101 via a bus serving as a communication line. The terminal T3 of each of the detection units 20 may be connected to the terminal T6 of the battery ECU 101 in another connection format such as a star connection. The current sensor 103 is connected to a terminal T7 of the battery ECU 101 via a transmission line D4.

The battery ECU 101 includes a control value calculator 211, a voltage calculator 212, a current detector 213, a storage 214, and a stop controller 215, and is connected to the main controller 300 in the electric vehicle. The battery ECU 101 controls ON/OFF of the contactor 102 while giving a value for charge/discharge control of each of the battery cells 10 to the main controller 300 in the electric vehicle. Details of the battery ECU 101 will be described below.

In the battery system 500 illustrated in Fig. 1, the detection units 20 in the plurality of battery modules 100, the battery ECU 101, the transmission lines D1, and the communication lines D2 and D3 constitute a battery control device 400.

(1-2) Voltage Detector

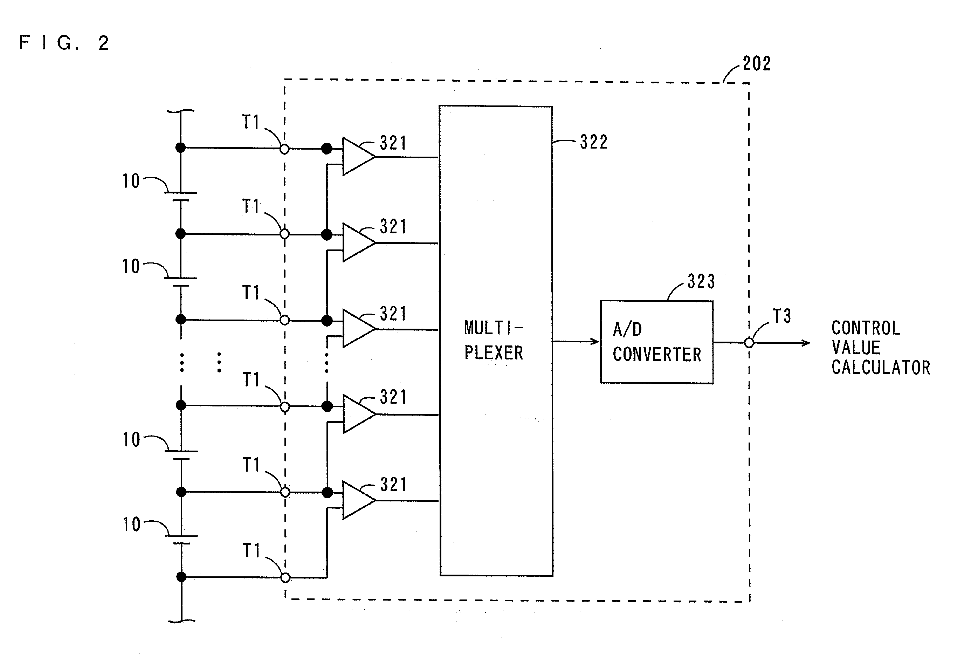

Fig. 2 is a block diagram illustrating a configuration of the voltage detector 202 illustrated in Fig. 1. As illustrated in Fig. 2, the voltage detector 202 includes a plurality of differential amplifiers 321, a multiplexer 322, and an A/D converter (Analog-to-Digital Converter) 323.

Each of the differential amplifiers 321 has two input terminals and an output terminal. Each of the differential amplifiers 321 differentially amplifies voltages respectively input to the two input terminals, and outputs the amplified voltages from the output terminal. The two input terminals of each of the differential amplifiers 321 are respectively connected to a positive electrode terminal and a negative electrode terminal of each of the battery cells 10 via terminals T1.

Each of the differential amplifiers 321 differentially amplifies a voltage at each of the battery cells 10. Respective output voltages of the plurality of differential amplifiers 321 are fed to the multiplexer 322. The multiplexer 322 sequentially outputs the output voltages of the plurality of differential amplifiers 321 to the A/D converter 323. The A/D converter 323 converts an output voltage of the multiplexer 322 into a digital value. The digital value obtained by the A/D converter 323 represents a terminal voltage of each of the battery cells 10.

Thus, the voltage detector 202 has the function of detecting the terminal voltage of each of the battery cells 10 with high precision. The detected terminal voltage is transmitted for each predetermined period of time (e.g., several milliseconds) to the control value calculator 211 in the battery ECU 101 via the communication lines D2 and D3 illustrated in Fig. 1.

(1-3) Details of Range Determiner, Voltage Calculator, and Current Detector

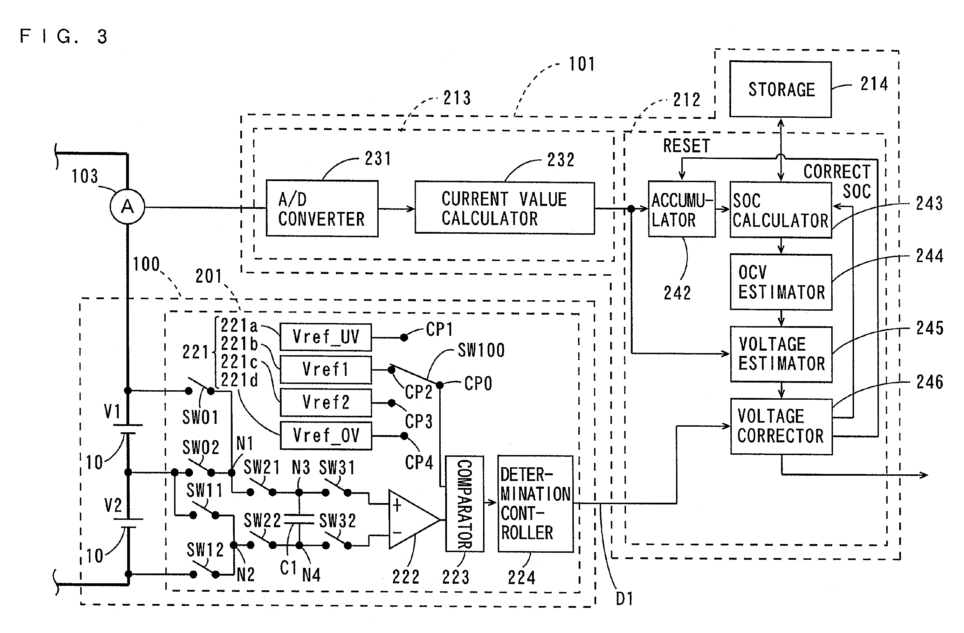

Fig. 3 is a block diagram illustrating a configuration of the range determiner 201, the voltage calculator 212, and the current detector 213 illustrated in Fig. 1. In an example illustrated in Fig. 3, only the range determiner 201 in one of the plurality of battery modules 100 is illustrated for simplicity of illustration. In the example illustrated in Fig. 3, the battery module 100 includes two battery cells 10. V1 denotes a terminal voltage of one of the battery cells 10, and V2 denotes a terminal voltage of the other battery cell 10.

As illustrated in Fig. 3, the current detector 213 includes an A/D (Analog-to-Digital) converter 231 and a current value calculator 232. The current sensor 103 outputs a value of a current flowing through each of the battery modules 100 as a voltage. The A/D converter 231 converts an output voltage of the current sensor 103 into a digital value. The current value calculator 232 calculates the value of the current based on the digital value obtained by the A/D converter 231.

The range determiner 201 includes a reference voltage unit 221, a differential amplifier 222, a comparator 223, a determination controller 224, a plurality of switching elements SW01, SW02, SW11, SW12, SW21, SW22, SW31, SW32, and SW100, and a capacitor C1. Each of the switching elements SW01, SW02, SW11, SW12, SW21, SW22, SW31, SW32, and SW100 is composed of a transistor, for example.

The differential amplifier 222 has two input terminals and an output terminal. The switching element SW01 is connected between the positive electrode terminal of one of the battery cells 10 and a node N1, and the switching element SW02 is connected between the positive electrode terminal of the other battery cell 10 and the node N1. The switching element SW11 is connected between the negative electrode terminal of one of the battery cells 10 and a node N2, and the switching element SW12 is connected between the negative electrode terminal of the other battery cell 10 and the node N2. The switching element SW21 is connected between the node N1 and a node N3, and the switching element SW22 is connected between the node N2 and a node N4. The capacitor C1 is connected between the node N3 and the node N4. The switching element SW31 is connected between the node N3 and one of the input terminals of the differential amplifier 222, and the switching element SW32 is connected between the node N4 and the other input terminal of the differential amplifier 222. The differential amplifier 222 differentially amplifies voltages respectively input to the two input terminals, and outputs the amplified voltages from the output terminal. An output voltage of the differential amplifier 222 is fed to one of input terminals of the comparator 223.

The switching element SW100 has a plurality of terminals CP0, CP1, CP2, CP3, and CP4. The reference voltage unit 221 includes four reference voltage outputters 221a, 221b, 221c, and 221d. The reference voltage outputters 221a to 221d respectively output a lower-limit voltage Vref_UV, a lower-side intermediate voltage Vref1, an upper-side intermediate voltage Vref2, and an upper-limit voltage Vref_OV as reference voltages to the terminals CP1, CP2, CP3, and CP4. The upper-limit voltage Vref_OV is higher than the upper-side intermediate voltage Vref2, the upper-side intermediate voltage Vref2 is higher than the lower-side intermediate voltage Vref1, and the lower-side intermediate voltage Vref1 is higher than the lower-limit voltage Vref_UV. The lower-side intermediate voltage Vref1 is 3.70 [V], for example, and the upper-side intermediate voltage Vref2 is 3.75 [V], for example.

The switching element SW100 is switched so that one of the plurality of terminals CP1 to CP4 is connected to the terminal CP0. The terminal CP0 of the switching element SW100 is connected to the other input terminal of the comparator 223. The comparator 223 compares the magnitudes of the voltages input to the two input terminals, and outputs a signal representing a comparison result from the output terminal.

In this example, when the output voltage of the differential amplifier 222 is not less than a voltage at the terminal CP0, the comparator 223 outputs a logical "1" (e.g., high-level) signal. When the output voltage of the differential amplifier 222 is lower than the voltage at the terminal CP0, the comparator 223 outputs a logical "0" (e.g., low-level) signal.

The determination controller 224 controls switching among the plurality of switching elements SW01, SW02, SW11, SW12, SW21, SW22, SW31, SW32, and SW100 while determining in which of a plurality of voltage ranges a voltage of the battery cell 10 in the battery module 100 exists based on the output signal of the comparator 223. Voltage range determination processing for the battery cell 10 will be described below.

The voltage calculator 212 includes an accumulator 242, an SOC calculator 243, an OCV estimator 244, a voltage estimator 245, and a voltage corrector 246.

The accumulator 242 acquires respective values of the currents flowing through the plurality of battery cells 10 from the current detector 213 for each predetermined period of time, and accumulates the acquired values of the currents to calculate a current accumulated value.

The SOC calculator 243 calculates, based on the SOC of each of the battery cells 10 stored in the storage 214 and the current accumulated value calculated by the accumulator 242, a value of the SOC at the current time point of the battery cell 10. The SOC calculator 243 then calculates, based on a value of the SOC fed from the voltage corrector 246, described below, and the current accumulated value calculated by the accumulator 242, the SOC at the current time point of each of the battery cells 10.

The OCV estimator 244 estimates, based on the SOC of each of the battery cells 10, which has been calculated by the SOC calculator 243, an open voltage (OCV) at the current time point of the battery cell 10.

The voltage estimator 245 estimates, based on the value of the current flowing through each of the plurality of battery cells 10, which has been calculated by the current value calculator 232, and the OCV of the battery cell 10, which has been estimated by the OCV estimator 244, the terminal voltage at the current time point of the battery cell 10.

The voltage corrector 246 includes a timer (not illustrated). The voltage corrector 246 corrects, based on the voltage range of each of the battery cells 10, which has been determined by the determination controller 224, the terminal voltage at the current time point of the battery cell 10, which has been estimated by the voltage estimator 245, corrects the OCV at the current time point based on the corrected terminal voltage, and corrects the SOC at the current time point of the battery cell 10 based on the corrected OCV. The voltage corrector 246 feeds the corrected SOC at the current time point of each of the battery cells 10 to the SOC calculator 243 while resetting the current accumulated value calculated by the accumulator 242.

In the present embodiment, the determination controller 224 is implemented by hardware such as a CPU and a memory, and software such as a computer program. In this case, the CPU executes a computer program stored in the memory, to implement functions of the determination controller 224. A part or the whole of the determination controller 224 may be implemented by hardware such as ASIC (Application Specific Integrated Circuits).

Similarly, in the present embodiment, the voltage calculator 212, the current value calculator 232, a control value calculator 211, described below, and a stop controller 215, described below, are implemented by hardware such as a CPU (Central Processing Unit) and a memory, and software such as a computer program. The accumulator 242, the SOC calculator 243, the OCV estimator 244, the voltage estimator 245, the voltage corrector 246, the current value calculator 232, the control value calculator 211, and the stop controller 215 correspond to a module of the computer program. In this case, the CPU executes the computer program stored in the memory, to implement functions of the accumulator 242, the SOC calculator 243, the OCV estimator 244, the voltage estimator 245, the voltage corrector 246, the current value calculator 232, the control value calculator 211, and the stop controller 215. Some or all of the accumulator 242, the SOC calculator 243, the OCV estimator 244, the voltage estimator 245, the voltage corrector 246, the current value calculator 232, the control value calculator 211, and the stop controller 215 may be implemented by hardware.

(1-4) Voltage Range Determination Processing for Battery Cell

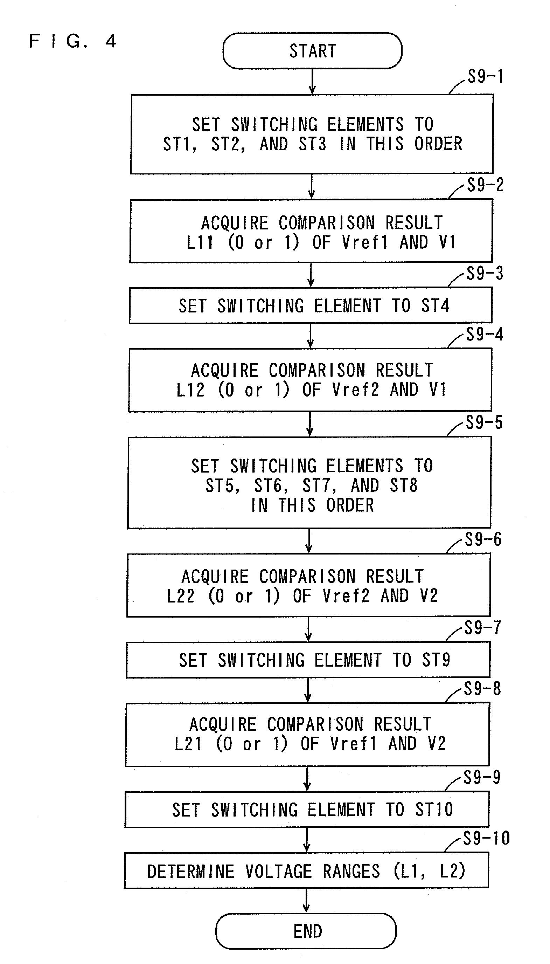

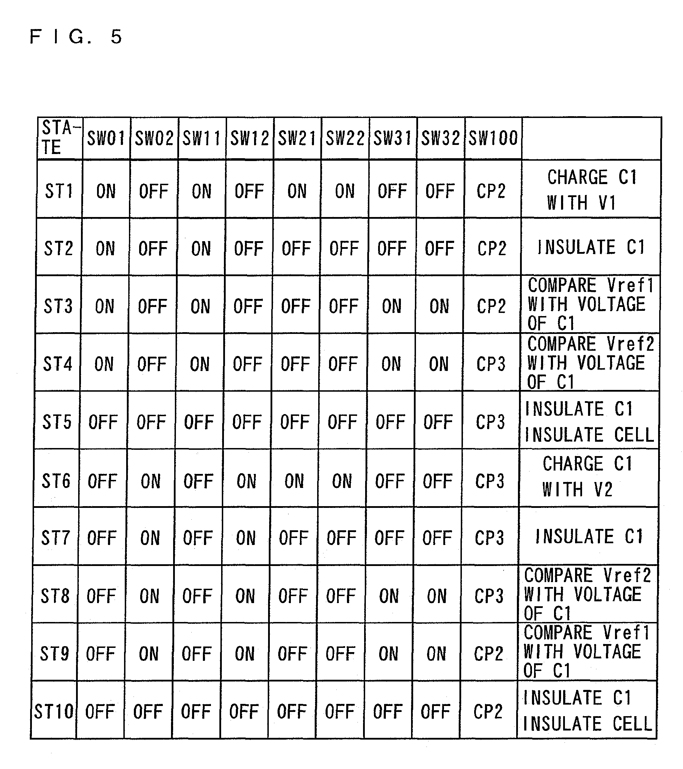

Voltage range determination processing for the battery cell 10 by the determination controller 224 will be described. Fig. 4 is a flowchart illustrating the voltage range determination processing by the determination controller 224. In the present embodiment, the CPU constituting the determination controller 224 executes a voltage range determination processing program stored in the memory so that the voltage range determination processing is performed. Fig. 5 is a diagram illustrating states of the switching elements SW01, SW02, SW11, SW12, SW21, SW22, SW31, SW32, and SW100. The determination controller 224 previously stores states illustrated in Fig. 5 as data. The voltage range determination processing illustrated in Fig. 4 is started when the determination controller 224 receives a voltage range acquisition signal from the voltage calculator 212, as described below.

As illustrated in Figs. 4 and 5, the determination controller 224 sets the switching elements SW01, SW02, SW11, SW12, SW21, SW22, SW31, SW32, and SW100 to states ST1, ST2, and ST3 in this order (step S9-1). In the states ST1, ST2, and ST3, the switching element SW100 is switched to the terminal CP2. Thus, the lower-side intermediate voltage Vref1 from the reference voltage outputter 221b is fed to the comparator 223.

In the state ST1, the switching elements SW01, SW11, SW21, and SW22 are turned on, and the switching elements SW02, SW12, SW31, and SW32 are turned off. Thus, the capacitor C1 is charged with the terminal voltage V1 of one of the battery cells 10.

In the state ST2, the switching elements SW21 and SW22 are then turned off. Thus, the capacitor C1 is separated from the battery cell 10.

Then, in the state ST3, the switching elements SW31 and SW32 are turned on. Thus, a voltage of the capacitor C1 is fed as the terminal voltage V1 of one of the battery cells 10 to the comparator 223.

In this case, the comparator 223 compares the lower-side intermediate voltage Vref1 and the terminal voltage V1 of one of the battery cells 10, and outputs a logical "1" or "0" signal representing a comparison result L11. The determination controller 224 acquires the comparison result L11 of the lower-side intermediate voltage Vref1 and the terminal voltage V1 of one of the battery cells 10 (step S9-2).

The determination controller 224 then sets the switching SW100 to a state ST4 (step S9-3). In the state ST4, the switching element SW100 is switched to the terminal CP3. Thus, the upper-side intermediate voltage Vref2 from the reference voltage outputter 221c is fed to the comparator 223.

In this case, the comparator 223 compares the upper-side intermediate voltage Vref2 and the terminal voltage V1 of one of the battery cells 10, and outputs a logical "1" or "0" signal representing a comparison result L12. The determination controller 224 acquires the comparison result L12 of the upper-side intermediate voltage Vref2 and the terminal voltage V1 of one of the battery cells 10 (step S9-4).

The determination controller 224 then sets the switching elements SW01, SW02, SW11, SW12, SW21, SW22, SW31, SW32, and SW100 to states ST5, ST6, ST7, and ST8 in this order (step S9-5). In the state ST5, the switching elements SW01, SW02, SW11, SW12, SW21, SW22, SW31, and SW32 are set to OFF. Thus, the capacitor C1 is separated from the battery cell 10.

In the state ST6, the switching elements SW02, SW12, SW21, and SW22 are turned on. Thus, the capacitor C1 is charged with the terminal voltage V2 of the other battery cell 10.

In the state ST7, the switching elements SW21 and SW22 are then turned off. Thus, the capacitor C1 is separated from the other battery cell 10.

Then, in the state ST8, the switching elements SW31 and SW32 are turned on. Thus, a voltage of the capacitor C1 is fed as the terminal voltage V2 of the other battery cell 10 to the comparator 223.

In this case, the comparator 223 compares the upper-side intermediate voltage Vref2 and the terminal voltage V2 of the other battery cell 10, and outputs a logical "1" or "0" signal representing a comparison result L22. The determination controller 224 acquires the comparison result L22 of the upper-side intermediate voltage Vref2 and the terminal voltage V2 of the other battery cell 10 (step S9-6).

The determination controller 224 then sets the switching SW100 to a state ST9 (step S9-7). In the state ST9, the switching element SW100 is switched to the terminal CP2. Thus, the lower-side intermediate voltage Vref1 from the reference voltage outputter 221b is fed to the comparator 223.

In this case, the comparator 223 compares the lower-side intermediate voltage Vref1 and the terminal voltage V2 of the other battery cell 10, and outputs a logical "1" or "0" signal representing a comparison result L21. The determination controller 224 acquires the comparison result L21 of the lower-side intermediate voltage Vref1 and the terminal voltage V2 of the other battery cell 10 (step S9-8).

The determination controller 224 then sets the switching elements SW01, SW02, SW11, SW12, SW21, SW22, SW31, SW32, and SW100 to a state ST10 (step S9-9). In the state ST10, the switching elements SW01, SW02, SW11, SW12, SW21, SW22, SW31, and SW32 are set to OFF. Thus, the capacitor C1 is separated from the battery cell 10.

Finally, the determination controller 224 determines the voltage range L1 of one of the battery cells 10 from the acquired comparison results L11 and L12 while determining the voltage range L2 of the other battery cell 10 from the acquired comparison results L21 and L22 (step S9-10).

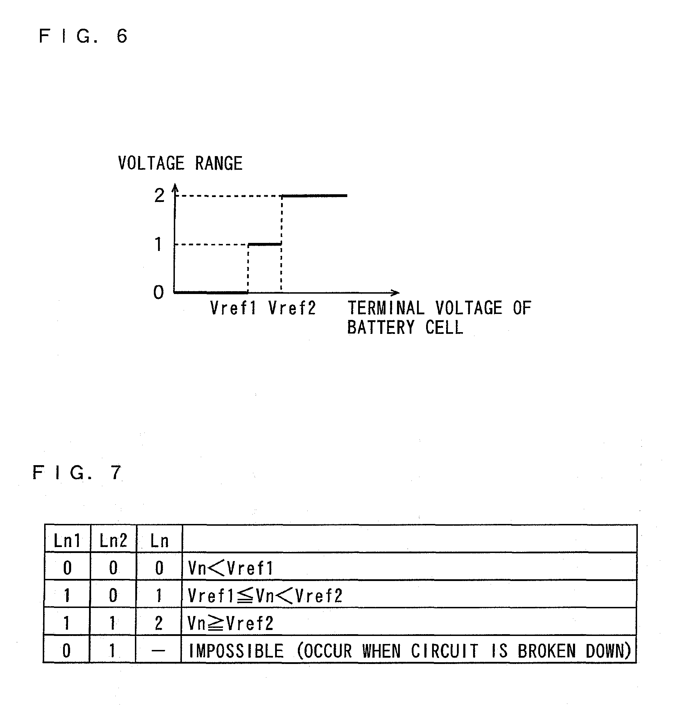

Fig. 6 is a diagram illustrating a relationship between the terminal voltage of the battery cell 10 and a voltage range. As illustrated in Fig. 6, a voltage range "0" is less than the lower-side intermediate voltage Vref1, a voltage range "1" is in a range of not less than the lower-side intermediate voltage Vref1 and less than the upper-side intermediate voltage Vref2, and the voltage range "2" is not less than the upper-side intermediate voltage Vref2. Fig. 7 is a diagram illustrating a relationship between a comparison result of the comparator 223 and a voltage range.

In Fig. 7, n is a positive integer for specifying each of the plurality of battery cells 10. In this example, Ln1 and Ln2 are respectively the comparison results L11 and L12 corresponding to one of the battery cells 10 or the comparison results L21 and L22 corresponding to the other battery cell 10, and Vn is the terminal voltage V1 of one of the battery cells 10 or the terminal voltage V2 of the other battery cell 10.

If both the comparison results Ln1 and Ln2 of the comparator 223 are logical "0", as illustrated in Fig. 7, the determination controller 224 determines that the voltage range Ln is "0". This indicates that the terminal voltage Vn of the battery cell 10 is less than the lower-side intermediate voltage Vref1.

If the comparison result Ln1 of the comparator 223 is logical "1", and the comparison result Ln2 thereof is logical "0", the determination controller 224 determines that the voltage range Ln is "1". This indicates that the terminal voltage Vn of the battery cell 10 is not less than the lower-side intermediate voltage Vref1 and less than the upper-side intermediate voltage Vref2.

Further, if both the comparison results Ln1 and Ln2 of the comparator 223 are logical "1", the determination controller 224 determines that the voltage range Ln is "2". This indicates that the terminal voltage Vn of the battery cell 10 is the upper-side intermediate voltage Vref2 or more.

If the comparison result Ln1 of the comparator 223 is logical "0", and the comparison result Ln2 thereof is logical "1", the determination controller 224 does not determine the voltage range Ln. This indicates that the terminal voltage Vn of the battery cell 10 exceeds the upper-side intermediate voltage Vref2 while being less than the lower-side intermediate voltage Vref1. Such a situation is considered to occur when the reference voltage unit 221, the differential amplifier 222, or the comparator 223 is broken down.

In step S9-10 illustrated in Fig. 4, it is determined in which of the voltage ranges "0", "1", and "2" the terminal voltage V1 of one of the battery cells 10 and the terminal voltage V2 of the other battery cell 10 exist based on the relationship illustrated in Fig. 7. A determination result of the voltage range of each of the battery cells 10 by the determination controller 224 is transmitted to the voltage calculator 212 in the battery ECU 101 via the transmission line D1 illustrated in Fig. 1.

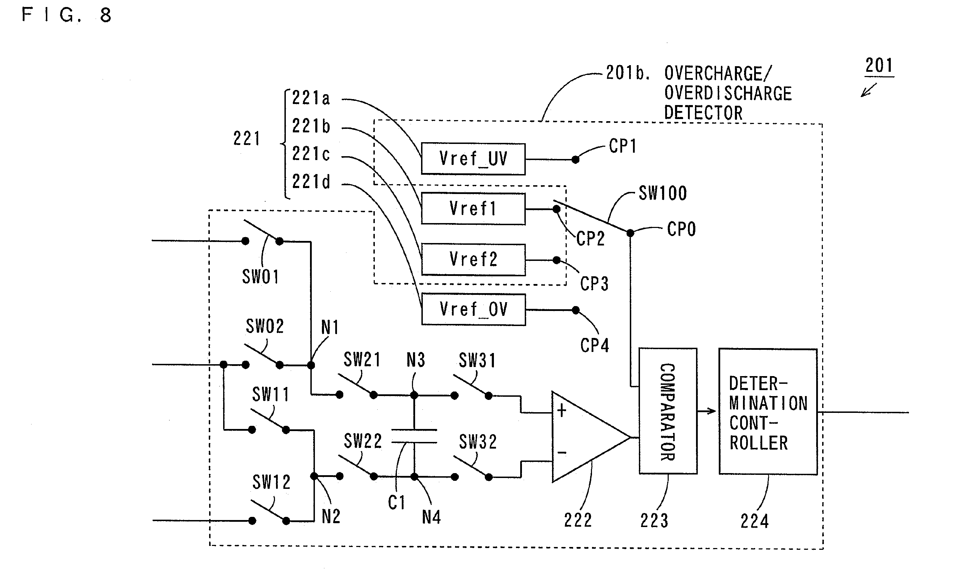

In this example, the range determiner 201 includes an overcharge/overdischarge detector 201b that detects overcharge and overdischarge of the battery cell 10. Fig. 8 is a block diagram illustrating a configuration of the overcharge/overdischarge detector 201b. As illustrated in Fig. 8, the overcharge/overdischarge detector 201b includes reference voltage outputters 221a and 221d, a differential amplifier 222, a comparator 223, a determination controller 224, a plurality of switching elements SW01, SW02, SW11, SW12, SW21, SW22, SW31, SW32, and SW100, and a capacitor C1.

The switching element SW100 is switched to a terminal CP1 so that a lower-limit voltage Vref_UV from the reference voltage outputter 221a is fed to the comparator 223. In this state, the terminal voltage of each of the battery cells 10 is fed to the comparator 223 via the capacitor C1 and the differential amplifier 222 so that the lower-limit voltage Vref_UV and the terminal voltage of each of the battery cells 10 are compared with each other. Similarly, the switching element SW100 is switched to a terminal CP4 so that an upper-limit voltage Vref_OV from the reference voltage outputter 221d is fed to the comparator 223. In this state, the terminal voltage of each of the battery cells 10 is fed to the comparator 223 via the capacitor C1 and the differential amplifier 222 so that the upper-limit voltage Vref_OV and the terminal voltage of each of the battery cells 10 are compared with each other.

If the terminal voltage of the battery cell 10 is lower than the lower-limit voltage Vref_UV, the battery cell 10 is in an overdischarge state. If the terminal voltage of the battery cell 10 is higher than the upper-limit voltage Vref_OV, the battery cell 10 is in an overcharge state.

If a comparison result indicating that the terminal voltage of at least one of the battery cells 10 has reached the lower-limit voltage Vref_UV or the upper-limit voltage Vref_OV is output from the comparator 223, the determination controller 224 feeds a charge/discharge stop signal to the stop controller 215 (Fig. 1) in the battery ECU 101 via the transmission line D1. In this case, the stop controller 215 turns off the contactor 102 in response to the charge/discharge stop signal from the determination controller 224. Thus, the charge or discharge of each of the battery cells 10 is stopped. As a result, the safety of each of the battery cells 10 by overdischarge or overcharge can be ensured.

The overcharge/overdischarge detector 201b having the above-mentioned configuration has been conventionally used to detect the overcharge and overdischarge of the battery cell 10. In this example, the conventional overcharge/overdischarge detector 201b is diverted into the range determiner 201 by adding the reference voltage outputter 221b that outputs the lower-side intermediate voltage Vref1 and the upper-side intermediate voltage Vref2 that outputs the upper-side intermediate voltage Vref2 to the conventional overcharge/overdischarge detector 201b. This prevents the battery control device 400 from becoming complex in configuration and increasing in cost.

Further, the voltage calculator 212 can calculate the terminal voltage of each of the battery cells 10 using a determination result of the voltage range transmitted from the range determiner 201. Thus, the charge/discharge control of each of the battery cells 10 can be performed with sufficient precision while preventing the battery control device 400 from becoming complex in configuration and increasing in cost. More specifically, the terminal voltage of each of the battery cells 10 can be calculated based on the current flowing through each of the battery cells 10. Further, the calculated terminal voltage can be corrected using the determination result of the voltage range of each of the battery cells 10 by the range determiner 201. Thus, the precision of the charge/discharge control of each of the battery cells 10 can be prevented from decreasing as compared with when an A/D converter or the like capable of detecting a terminal voltage of each of battery cells 10 with high precision is used.

(1-5) SOC Calculation Processing for Battery Cell

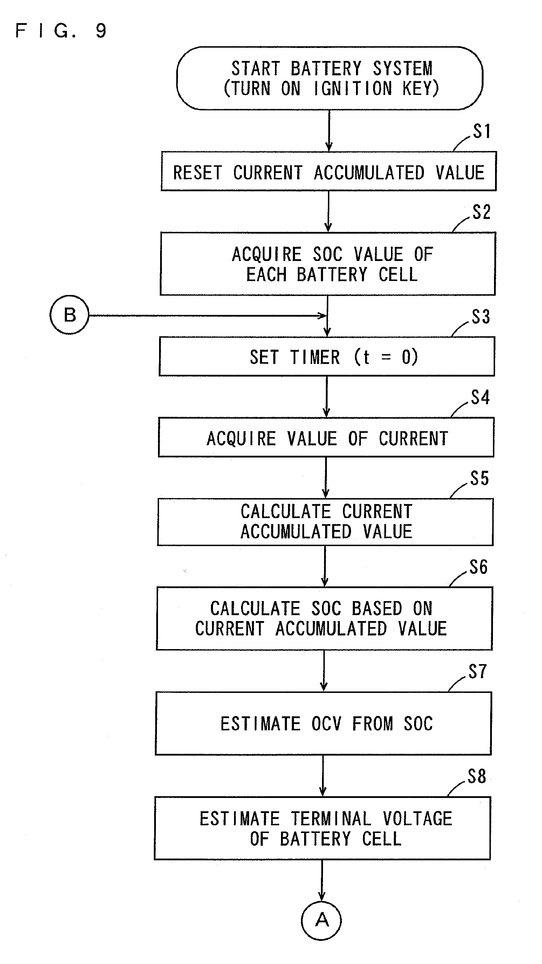

SOC calculation processing for the battery cell 10 by the battery calculator 212 and the current value calculator 232 will be described below. Figs. 9 to 11 are flowcharts illustrating the SOC calculation processing by the voltage calculator 212 and the current value calculator 232. In the present embodiment, the CPU executes an SOC calculation processing program stored in the memory so that SOC calculation processing is performed.

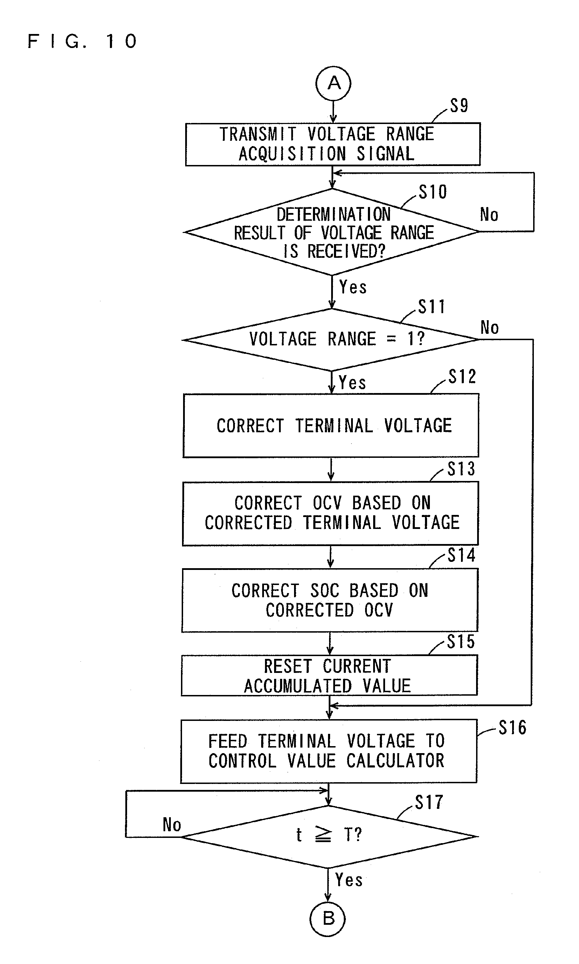

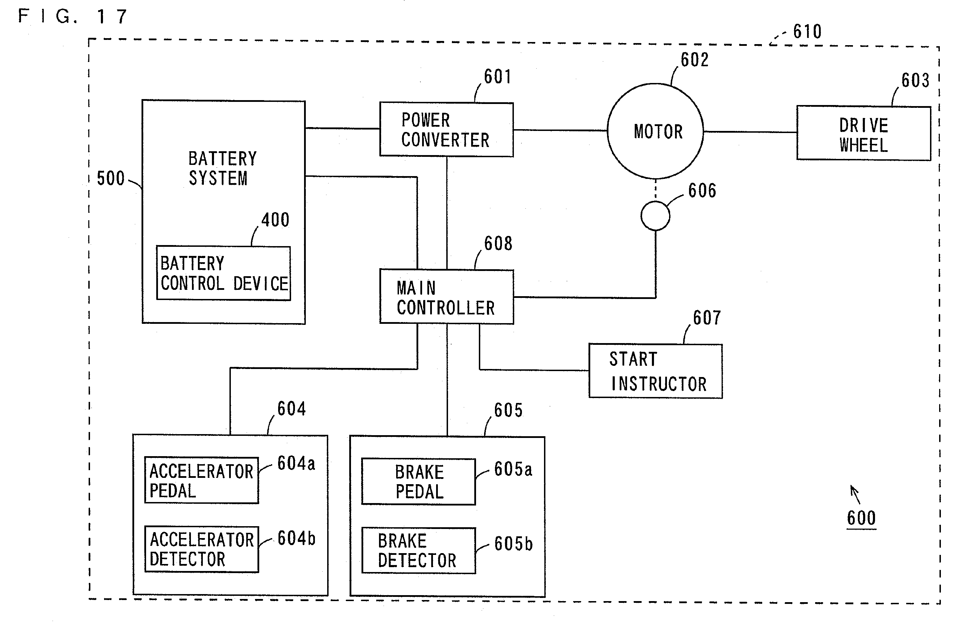

As illustrated in Figs. 9 and 10, when an ignition key of a start instructor 607 (Fig. 17, described below) in the vehicle is turned on, the battery system 500 is started, and the voltage corrector 246 resets a current accumulated value calculated by the accumulator 242 (step S1). The SOC calculator 243 then acquires the SOC of each of the battery cells 10 from the storage 214 (step S2).

The storage 214 stores a value of the SOC acquired when the ignition key is turned off in the previous SOC calculation processing. The voltage corrector 246 sets a timer (step S3). Thus, the timer starts to measure an elapsed time. The timer is set so that a measured value t becomes zero.

Then, the current value calculator 232 acquires values of the currents respectively flowing through the plurality of battery cells 10 (step S4). The accumulator 242 accumulates the values of the currents acquired by the current value calculator 232, to calculate a current accumulated value (step S5). The SOC calculator 243 calculates the SOC at the current time point based on the calculated current accumulated value and the acquired SOC (step S6). When a value of the SOC at the previous time point of the i-th battery cell 10 is SOC (i) [%], the current accumulated value is $\Sigma I$ [Ah], and a full charging capacity of the i-th battery cell 10 is C(i) [Ah], a value SOC_new(i) of the SOC at the current time point of the i-th battery cell 10 is calculated by the following equation (1), for example, where i is any integer from 1 to a value representing the number of battery cells 10:

$$\text{SOC\_new (i)} = \text{SOC (i)} + \Sigma I/C (i) \ [\%] \ … \ (1)$$

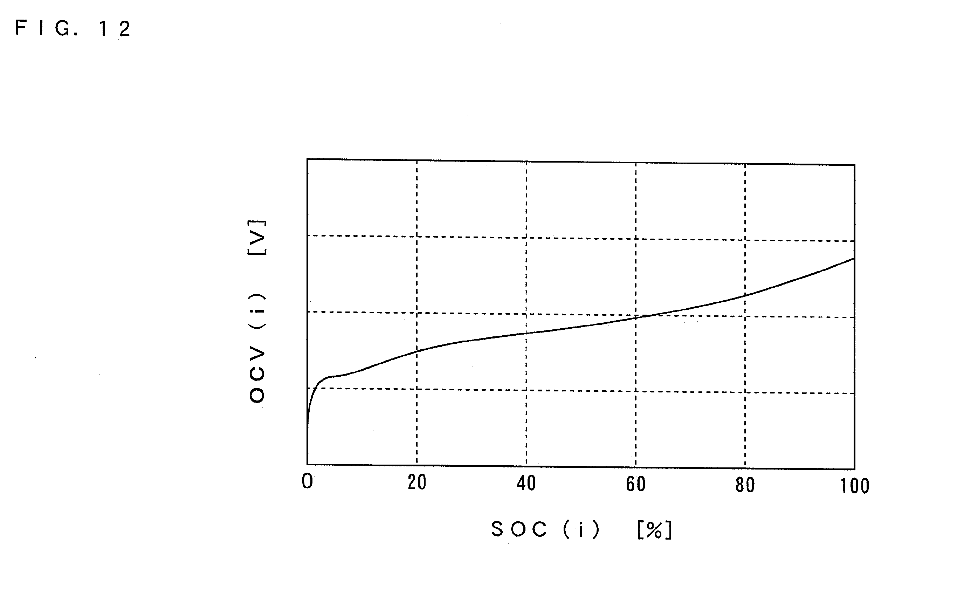

The OCV estimator 244 then estimates the OCV at the current time point of each of the battery cells 10 from the calculated SOC at the current time point (step S7). Fig. 12 illustrates a relationship between respective values of the SOC and the OCV of the i-th battery cell 10. The relationship illustrated in Fig. 12 is previously stored in the OCV estimator 244. The OCV of each of the battery cells 10 is estimated by referring to the relationship illustrated in Fig. 12, for example. The relationship between the SOC and the OCV of the battery cell 10 may be stored as a function or may be stored in a tubular form.

The voltage estimator 245 estimates the terminal voltage at the current time point of each of the battery cells 10 from the OCV at the current time point (step S8). When a value of the OCV at the current time point of the i-th battery cell 10 is V0(i) [V], a value of the current flowing through each of the plurality of battery cells 10 is I [A], and an internal impedance of the i-th battery cell 10 is Z(i) [Q], a value Vest(i) of a terminal voltage at the current time point of the i-th battery cell 10 is estimated by the following equation (2), for example:

$$\text{Vest (i)} = \text{V0 (i)} + \text{I} \times \text{Z (i)} \ [V] \ … \ (2)$$

Here, the value I of the current is positive at the time of charge, and is negative at the time of discharge. A previously measured value, for example, is used as the internal impedance of each of the battery cells 10. In this case, the internal impedance is stored in the storage 214.

The voltage corrector 246 then transmits a voltage range acquisition signal to the determination controller 224 in each of the battery modules 100 (step S9). Each of the determination controllers 224 performs the voltage range determination processing illustrated in Fig. 4 when it receives the voltage range acquisition signal from the voltage corrector 246. Each of the determination controllers 224 transmits a determination result of voltage ranges of the corresponding plurality of battery cells 10 to the voltage corrector 246.

The voltage corrector 246 then determines whether the determination result of the voltage ranges from all the determination controllers 224 has been received (step S10). If the determination result of the voltage ranges from all the determination controllers 224 is not received, the voltage corrector 246 waits until the determination result of the voltage ranges from all the determination controllers 224 is received.

If the determination result of the voltage ranges from all the determination controllers 224 is received, the voltage corrector 246 determines whether the voltage range of each of the battery cells 10 is "1" (step S11). If the voltage range of each of the battery cells 10 is "1", i.e., if the terminal voltage of each of the battery cells 10 is not less than the lower-side intermediate voltage Vref1 and less than the upper-side intermediate voltage Vref2, the voltage corrector 246 corrects the terminal voltage at the current time point of each of the battery cells 10 in the following method (step S12). Letting $\alpha$ be a smoothing coefficient, a value Vest_new (i) of the terminal voltage after the correction of the i-th battery cell 10 is calculated by the following equation (3), for example. The smoothing coefficient $\alpha$ is not less than zero nor more than one:

$$\text{Vest\_new (i)} = \alpha \times \text{Vest (i)} + (1 - \alpha) \times (\text{Vref1} + \text{Vref2})/2 \ [V] \ \dots \ (3)$$

The voltage corrector 246 corrects the OCV at the current time point of each of the battery cells 10 in the following method based on the corrected terminal voltage at the current time point of the battery cell 10 (step S13). A value V0_new (i) of the OCV after the correction of the i-th battery cell 10 is calculated by the following equation (4), for example.

$$\text{V0\_new(i)} = \text{V0(i)} + (\text{Vest\_new(i)} - \text{Vest(i)}) \ [V] \ \dots \ (4)$$

Further, the voltage corrector 246 corrects the SOC at the current time point of each of the battery cells 10 based on the corrected OCV at the current time point (step S14). The SOC at the current time point after the correction is found by referring to the relationship illustrated in Fig. 12, for example.

The voltage corrector 246 then resets the current accumulated value calculated by the accumulator 242 (step S15). The voltage corrector 246 feeds the terminal voltage at the current time point of each of the battery cells 10, which has been corrected in step S12, to the control value calculator 211 illustrated in Fig. 1 (step S16).

Then, the voltage corrector 246 waits until the measured value t of the timer reaches a predetermined time T (step S17). When the measured value t of the timer reaches the predetermined time T, the voltage corrector 246 returns to the processing in step S3. The SOC of each of the battery cells 10, which is stored in the storage 214, is replaced with the SOC at the current time point of the battery cell 10, which has been corrected by the voltage corrector 246, to repeat the processing from step S3 to step S17.

If the voltage range of each of the battery cells 10 is not "1" in step S11, i.e., if the voltage range is "0" (if the terminal voltage of the battery cell 10 is less than the lower-side intermediate voltage Vref1) or is "2" (if the terminal voltage of the battery cell 10 is the upper-side intermediate voltage Vref2 or more), the terminal voltage of the battery cell 10 cannot be appropriately corrected by the foregoing equation (3). Therefore, the voltage corrector 246 proceeds to the processing in step S16 without correcting the terminal voltage, correcting the OCV, and correcting the SOC. In step S16, the terminal voltage at the current time point, which has been estimated by the voltage estimator 245 in step S8, is fed to the control value calculator 211 illustrated in Fig. 1.

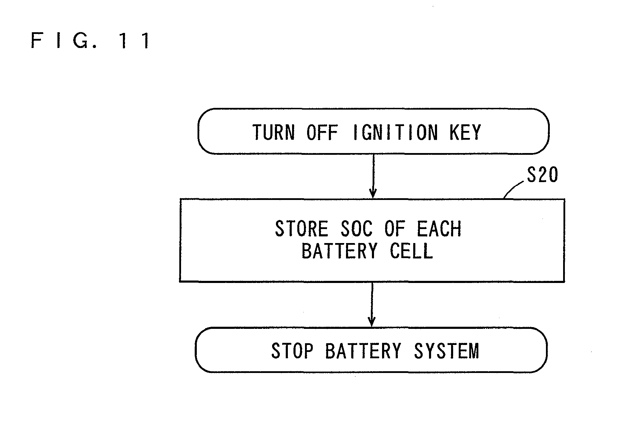

On the other hand, when the ignition key of the start instructor 607 in the electric vehicle (Fig. 17, described below) is turned off, the SOC calculator 243 stores the SOC at the current time point of each of the battery cells 10 in the storage 214 (step S20), as illustrated in Fig. 11. In this case, the SOC stored in the storage 214 is updated to the SOC at the current time point. Then, the battery system 500 is stopped.

(1-6) Control Value Calculator

As described above, the terminal voltage of each of the battery cells 10, which has been detected by the voltage detector 202 in each of the battery modules 100, is transmitted to the control value calculator 211 in the battery ECU 101 illustrated in Fig. 1 via the communication lines D2 and D3. The terminal voltage of each of the battery cells 10, which has been calculated by the voltage calculator 212, is fed to the control value calculator 211. The terminal voltage of each of the battery cells 10, which has been detected by the voltage detector 202, is referred to as a detection voltage, and the terminal voltage of each of the battery cells 10, which has been calculated by the voltage calculator 212, is referred to as a calculation voltage.

The control value calculator 211 includes a timer (not illustrated), and calculates a value for charge/discharge control (hereinafter referred to as a battery control value) of each of the battery cells 10 using one of the detection voltage and the calculation voltage and gives the value to the main controller 300 in the electric vehicle. The battery control value represents a capacity, which can be charged from the current time point until the terminal voltage of at least one of the battery cells 10 reaches the upper-limit voltage Vref_OV, or a capacity, which can be discharged from the current time point until the terminal voltage of at least one of the battery cells 10 reaches the lower-limit voltage Vref_UV.

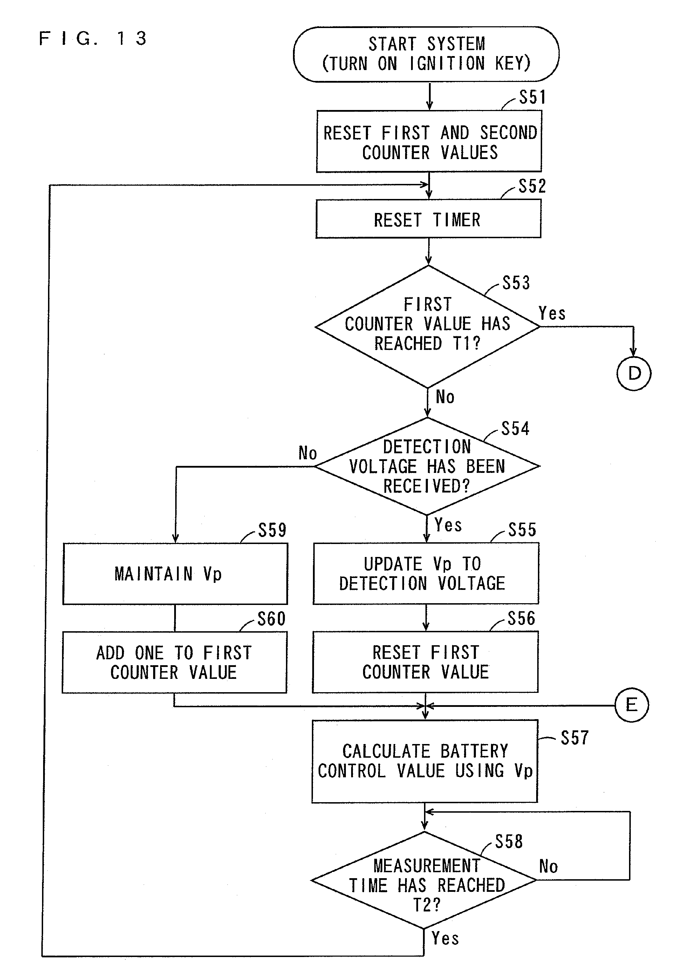

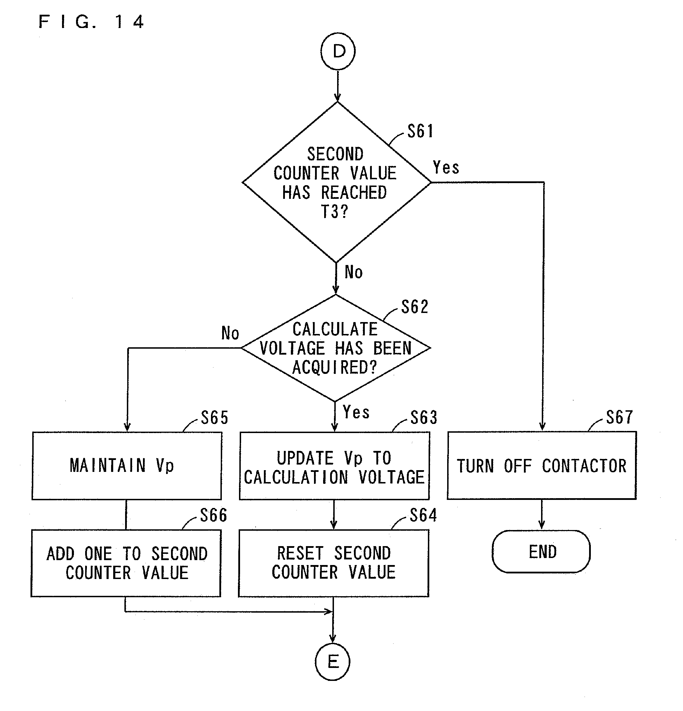

Figs. 13 and 14 are flowcharts of battery control value calculation processing by the control value calculator 211. In the present embodiment, the CPU executes a battery control value calculation processing program stored in the memory, to perform the battery control value calculation processing. When an ignition key of a start instructor 607 (Fig. 17, described below) in the electric vehicle is turned on, as illustrated in Fig. 13, the battery system 500 is started. Thus, the control value calculator 211 starts the battery control value calculation processing. First, the control value calculator 211 resets first and second counter values stored in the storage 214 (step S51). The first counter value is a value, which is added every time the processing passes through step S60, described below, and the second counter value is a value, which is added every time the processing passes through step S66, described below.

The control value calculator 211 then resets the timer (step S52). The timer starts to measure an elapsed time from this time point. The control value calculator 211 then determines whether the first counter value has reached a predetermined value T1 (step S53). If the first counter value does not reach the predetermined value T1, the control value calculator 211 determines whether detection voltages from all the voltage detectors 202 have been received (step S54). If the battery ECU 101 and each of the battery modules 100 are normally connected to each other via the communication lines D2 and D3, the control value calculator 211 receives the detection voltage from each of the voltage detectors 202.

If the detection voltages from all the voltage detectors 202 are received, the control value calculator 211 updates a voltage Vp stored in the storage 214 to the detection voltage (step S55). The voltage Vp corresponds to a terminal voltage of each of the battery cells 10 at the current time point.

The control value calculator 211 then resets the first counter value stored in the storage 214 (step S56). The control value calculator 211 then calculates the battery control value using the voltage Vp stored in the storage 214, and outputs the calculated battery control value (step S57). The battery control value output from the control value calculator 211 is given to the main controller 300 in the electric vehicle.

The control value calculator 211 then waits until a measurement time by the timer reaches a predetermined period of time T2 (step S58). When the measurement time by the timer reaches the predetermined period of time T2, the control value calculator 211 returns to the processing in step S52.

On the other hand, if the battery ECU 101 and each of the battery modules 100 are not normally connected to each other via the communication lines D2 and D3, the control value calculator 211 may not receive the detection voltage from at least one of all the voltage detectors 202. As described above, the detection voltage is transmitted for each predetermined period of time from each of the voltage detectors 202. The control value calculator 211 determines, when a state where the detection voltage is not received for a predetermined period of time longer than the predetermined period of time is maintained, that the detection voltage from the voltage detector 202 is not received in step S54.

Examples of a case where the detection voltage is not received include a case where a value of the voltage is not received in a predetermined data format (e.g., header information or a data series), a state where a value corresponding to a power supply voltage or a ground voltage is continuously received, a case where an indefinite value is received, a case where a received value vibrates, and a case where a receiving interval is a predetermined period of time or more.

If the detection voltages from all the voltage detectors 202 are not received in step S54, the control value calculator 211 maintains the voltage Vp stored in the storage 214 at a value updated in the previous step S55 (step S59). The control value calculator 211 adds one to the first counter value stored in the storage 214 (step S60), and proceeds to the processing in step S57.

When the state where the detection voltage is not received is maintained, one is repeatedly added to the first counter value in step S60. If the first counter value has reached the predetermined value T1 in step S53, the control value calculator 211 determines whether the second counter value has reached a predetermined value T3 (step S61), as illustrated in Fig. 14. If the second counter value has not reached the predetermined value T3, the control value calculator 211 determines whether the calculation voltage has been acquired (step S62). If the battery ECU 101 and each of the battery modules 100 are normally connected to each other via the transmission line D1, the control value calculator 211 acquires the calculation voltage.

If the calculation voltage has been acquired, the control value calculator 211 updates the voltage Vp stored in the storage 214 to the calculation voltage (step S55). The control value calculator 211 resets the second counter value, and proceeds to the processing in step S57 illustrated in Fig. 13.

On the other hand, if the battery ECU 101 and each of the battery modules 100 are not normally connected to each other via the transmission line D1, a determination result of the voltage ranges by all the range determiners 201 is not obtained in step S10 illustrated in Fig. 10. Thus, the voltage calculator 212 cannot calculate the calculation voltage. Therefore, the control value calculator 211 cannot acquire the calculation voltage. Examples of a case where the calculation voltage is not acquired include a case where a value of the voltage is not acquired in a predetermined data format (e.g., header information or a data series), a case where a value corresponding to a power supply voltage or a ground voltage is continuously acquired, a case where an indefinite value is acquired, a case where the acquired value vibrates, and a case where an acquisition interval is a predetermined period of time or more.

If the calculation voltage has not been acquired in step S62 illustrated in Fig. 14, the control value calculator 211 maintains the voltage Vp stored in the storage 214 at a value updated in the previous step S55 or step S63 (step S65). The control value calculator 211 adds one to the second counter value stored in the storage 214 (step S66), and proceeds to the processing in step S57 illustrated in Fig. 13.

When the state where the calculation voltage is not acquired is maintained, one is repeatedly added to the second counter value in step S66. If the second counter value has reached the predetermined value T3 in step S61, the control value calculator 211 causes the stop controller 215 to turn off the contactor 102 (step S67), and ends the battery control value calculation processing.

If the control value calculator 211 can neither receive the detection voltage from at least one of the voltage detectors 202 nor acquire the calculation voltage from the voltage calculator 212, the control value calculator 211 cannot calculate appropriate battery control values relating to all the battery cells 10. Thus, the main controller 300 cannot appropriately perform charge/discharge control of each of the battery cells 10. In this case, the contactor 102 is turned off, to enter a state where no current flows through each of the battery cells 10. Thus, each of the battery cells 10 can be sufficiently prevented from being overcharged and overdischarged.

When the ignition key of the start instructor 607 (Fig. 17, described below) in the electric vehicle is turned off, as illustrated in Fig. 11, the battery system 500 is stopped. At this time, the battery control value calculation processing by the control value calculator 211 ends.

(1-7) Effects of First Embodiment

Thus, in the battery control device 400 in the battery system 500 according to the first embodiment, if the control value calculator 211 can receive the detection voltages from all the voltage detectors 202, the battery control value is calculated using the detection voltages. As described above, the voltage detector 202 can detect the terminal voltage of each of the battery cells 10 with high precision. Thus, the control value calculator 211 can calculate an accurate battery control value by using the detection voltage.

On the other hand, the control value calculator 211 calculates the battery control value using the calculation voltage if it cannot receive the detection voltage from at least one of the voltage detectors 202. Thus, even if the communication lines D2 and D3 are disconnected, the control value calculator 211 can calculate the battery control value. Therefore, the reliability of the battery control device 400 is improved.

Even if the voltage detector 202 is not provided, the battery control value can be calculated using the calculation voltage. Thus, it is possible to simplify the configuration of the battery control device 400 (prevent the battery control device 400 from becoming complex in configuration) and reduce the cost thereof.

The voltage calculator 212 calculates the calculation voltage using the determination result of the voltage range of each of the battery cells 10 by the range determiner 201. In this case, the terminal voltage of each of the battery cells 10 is not detected so that the calculation voltage can be calculated in a simple configuration. Therefore, the reliability of the battery control device 400 can be improved while preventing the battery control device 400 from becoming complex in configuration and increasing in cost.

When the calculation voltage is calculated, the range determiner 201 determines whether the terminal voltage of each of the battery cells 10 belongs to the predetermined voltage range "1", and the voltage calculator 212 corrects the terminal voltage calculated based on the current if the terminal voltage of the battery cell 10 belongs to "1". Thus, the accurate calculation voltage can be obtained while preventing the battery control device 400 from becoming complex in configuration and increasing in cost.

The range determiner 201 determines whether the terminal voltage of each of the battery cells 10 belongs to the voltage range "1" by comparing the terminal voltage of the battery cell 10 with the lower-side intermediate voltage Vref1 and the upper-side intermediate voltage Vref2. Thus, the accurate calculation voltage of each of the battery cells 10 can be obtained without complicating the configuration of the battery control device 400.

The common range determiner 201 can determine the voltage range of each of the battery cells 10, and determine whether the terminal voltage of at least one of the battery cells 10 has reached the upper-limit voltage Vref_OV or the lower-limit voltage Vref_UV. This further prevents the battery control device 400 from becoming complex in configuration and increasing in cost.

(1-8) Modified Example

While in the above-mentioned first embodiment, the control value calculator 211 calculate, when it cannot communicate with at least one of the voltage detectors 202, the battery control value using the calculation voltage with respect to all the battery cells 10, the present invention is not limited to this. If the control value calculator 211 cannot communicate with some of the voltage detectors 202, for example, the control value calculator 211 may calculate the battery control value using the detection voltage from the voltage detector 202 with respect to the battery cell 10 corresponding to the voltage detector 202 with which it can communicate and using the calculation voltage with respect to the battery cell 10 corresponding to the voltage detector 202 with which it cannot communicate.

(2) Second Embodiment

(2-1) Configuration of Battery Control Device and Battery System

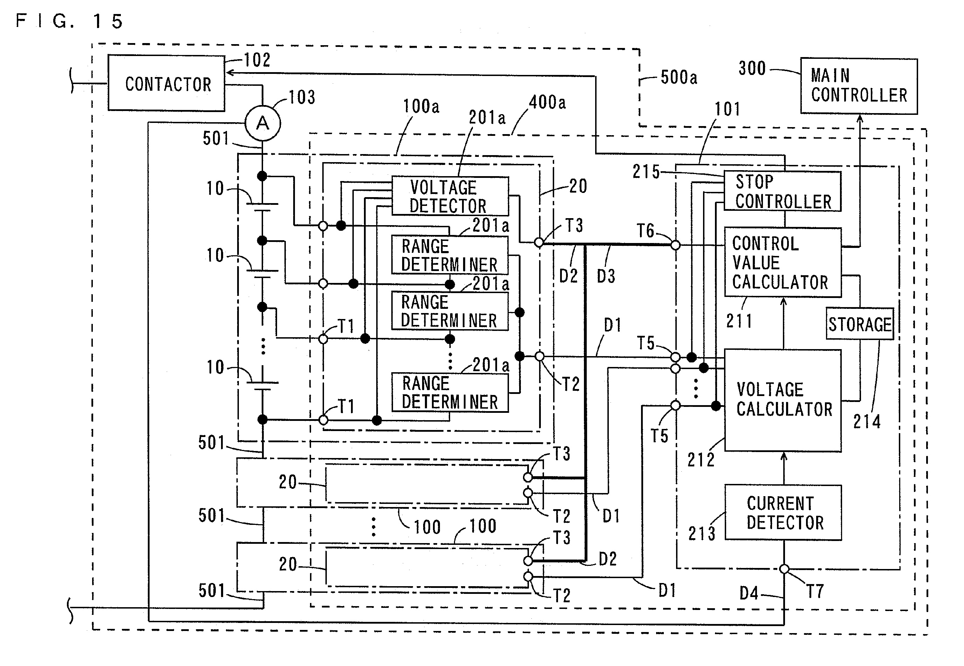

Fig. 15 is a block diagram illustrating a configuration of a battery control device according to a second embodiment and a battery system including the same. The battery control device 400a illustrated in Fig. 15 will be described by referring to differences from the battery control device 400 illustrated in Fig. 1.

In the battery control deice 400a in a battery system 500a illustrated in Fig. 15, a detection unit 20 in each of battery modules 100 is provided with a plurality of range determiners 201a corresponding to a plurality of battery cells 10. The range determiner 201a is not provided with switching elements SW01, SW02, SW11, and SW12 illustrated in Fig. 3.

(2-2) Effects of Second Embodiment

In the battery control device 400a in the battery system 500a according to the second embodiment, when a voltage range of each of the battery cells 10 is determined, the switching elements SW01, SW02, SW11, and SW12 need not be switched. The plurality of range determiners 201a can simultaneously determine voltage ranges of the plurality of battery cells 10. Thus, a period of time required to determine the voltage ranges can be significantly shortened.

(3) Third Embodiment

(3-1) Configuration of Battery Control Device and Battery System

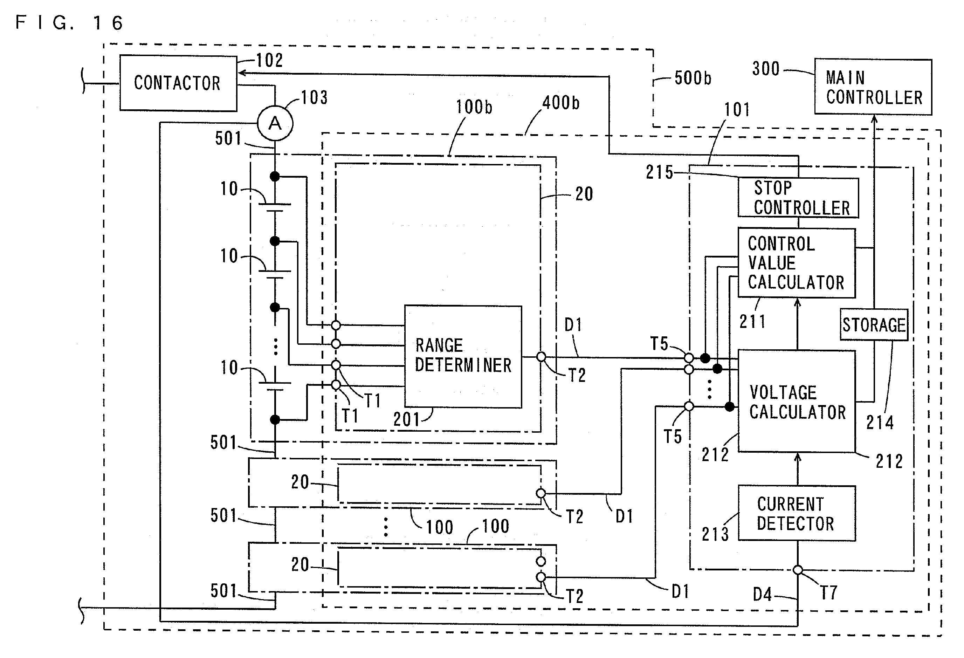

Fig. 16 is a block diagram illustrating a configuration of a battery control device according to a third embodiment and a battery system including the same. A battery control device 400b illustrated in Fig. 16 will be described by referring to differences from the battery control device 400 illustrated in Fig. 1.

In the battery control deice 400b in a battery system 500b illustrated in Fig. 16, a detection unit 20 in each of battery modules 100 is not provided with a voltage detector 202. A control value calculator 211 in a battery ECU 101 calculates a battery control value using a calculation voltage from a voltage calculator 212.

(3-2) Effects of Third Embodiment

In the battery control device 400b in the battery system 500b according to the third embodiment, the control value calculator 211 calculates the battery control value using the calculation voltage calculated based on a current value at the time of charge/discharge by a range determiner 201 and the voltage calculator 212 without detecting a terminal voltage of each of battery cells 10. Thus, charge/discharge control of each of the battery cells 10 can be performed with sufficient precision while preventing the battery control device 400b from becoming complex in configuration and increasing in cost. More specifically, the precision of the charge/discharge control of each of the battery cells 10 can be prevented from decreasing as compared with when an A/D converter or the like capable of detecting a terminal voltage of each of battery cells 10 with high precision is used.

In the battery control device 400b according to the third embodiment, each of the battery modules 100 may be provided with a plurality of range determiners 201a, which are similar to those in the second embodiment, instead of the range determiner 201.

(4) Fourth Embodiment

An electric vehicle according to a fourth embodiment will be described below. The electric vehicle according to the present embodiment includes a battery system 500 according to the first embodiment. An electric automobile will be described as an example of the electric vehicle.

(4-1) Configuration and Operation

Fig. 17 is a block diagram illustrating a configuration of an electric automobile according to the fourth embodiment. As illustrated in Fig. 17, an electric automobile 600 according to the present embodiment includes a vehicle body 610. The vehicle body 610 is provided with a battery system 500 and an electric power converter 601 illustrated in Fig. 1, and a motor 602M serving as the load illustrated in Fig. 3, a drive wheel 603, an accelerator device 604, a brake device 605, a rotational speed sensor 606, a start instructor 607, and a main controller 300. If the motor 602M is an alternating current (AC) motor, the electric power converter 601 includes an inverter circuit. The battery system 500 includes a battery control device 400 illustrated in Fig. 1.

The battery system 500 is connected to the motor 602M via the electric power converter 601 while being connected to the main controller 300.

A battery control value is given to the main controller 300 from a battery ECU 101 (Fig. 1) in the battery control device 400. The accelerator device 604, the brake device 605, the rotational speed sensor 606 are connected to the main controller 300. The main controller 300 includes a CPU and a memory, or a microcomputer, for example. Further, the start instructor 607 is connected to the main controller 300.

The accelerator device 604 includes an accelerator pedal 604a included in the electric automobile 600 and an accelerator detector 604b that detects an operation amount (a depression amount) of the accelerator pedal 604a.

When a user operates the accelerator pedal 604a with an ignition key of the start instructor 607 turned on, an accelerator detector 604b detects the operation amount of the accelerator 604a using a state where the user does not operate the accelerator pedal 604a as a basis. The detected operation amount of the accelerator pedal 604a is fed to the main controller 300.

The brake device 605 includes a brake pedal 605a included in the electric automobile 600 and a brake detector 605b that detects an operation amount (a depression amount) of the brake pedal 605a by the user. When the user operates the brake pedal 605a with the ignition key turned on, the brake detector 605b detects the operation amount. The detected operation amount of the brake pedal 605a is given to the main controller 300. The rotational speed sensor 606 detects a rotational speed of the motor 602M. The detected rotational speed is given to the main controller 300.

As described above, the battery control value, the operation amount of the accelerator pedal 604a, the operation amount of the brake pedal 605a, and the rotational speed of the motor 602M are given to the main controller 300. The main controller 300 performs charge/discharge control of a battery module 100 and electric power conversion control of the electric power converter 601 based on these information. When the electric automobile 600 is started and accelerated based on an accelerator operation, for example, electric power from the battery module 100 is supplied to the electric power converter 601 from the battery system 500.

Further, the main controller 300 calculates a torque (a command torque) to be transmitted to the drive wheel 603 based on the given operation amount of the accelerator pedal 604a, and feeds a control signal based on the command torque to the electric power converter 601.

The electric power converter 601, which has received the above-mentioned control signal, converts electric power supplied from the battery system 500 to electric power (driving electric power) required to drive the drive wheel 603. Thus, the driving electric power, which has been obtained in the conversion by the electric power converter 601, is supplied to the motor 602M, and a torque generated by the motor 602M based on the driving electric power is transmitted to the drive wheel 603.

On the other hand, the motor 602M functions as a power generation device when the electric automobile 600 is decelerated based on a brake operation. In this case, the electric power converter 601 converts regenerated electric power, which has been generated by the motor 602M, into electric power suitable for charge of the plurality of battery cells 10, and feeds the electric power to the plurality of battery cells 10. Thus, the plurality of battery cells 10 are charged.

(4-2) Effects of Fourth Embodiment

In the electric automobile 600 according to the fourth embodiment, the battery system 500 including the battery control device 400 according to the first embodiment is provided.

The battery system 500 according to the first embodiment is provided so that the battery control value can be calculated based on a current value at the time of charge/discharge even if the communication lines D2 and D3 are disconnected, for example. Therefore, the reliability of the electric automobile 600 is improved.

In the electric automobile 600 illustrated in Fig. 17, a battery system 500 including the battery control device 400a according to the second embodiment may be provided instead of the battery system 500 including the battery control device 400 according to the first embodiment. In this case, a plurality of range determiners 201a can simultaneously determine the voltage ranges of the plurality of battery cells 10. Thus, a period of time required to determine the voltage ranges can be significantly shortened.

In the electric automobile 600 illustrated in Fig. 17, a battery system 500b including the battery control device 400b according to the third embodiment may be provided instead of the battery system 500 including the battery control device 400 according to the first embodiment. In this case, charge/discharge control of each of the battery cells 10 can be performed with sufficient precision while preventing the battery control device 400b from becoming complex in configuration and increasing in cost. More specifically, the precision of the charge/discharge control of each of the battery cells 10 can be prevented from decreasing as compared with when an A/D converter or the like capable of detecting a terminal voltage of each of battery cells 10 with high precision is used. Therefore, the cost of the electric automobile 600 can be reduced.

(4-3) Another Movable Body

While an example in which the battery system 500 illustrated in Fig. 1 is loaded into the electric vehicle has been described above, the battery system 500 may be loaded into another movable body such as a ship, an airplane, an elevator, or a walking robot.

The ship, which is loaded with the battery system 500, includes a hull instead of the vehicle body 610 illustrated in Fig. 17, includes a screw instead of the drive wheel 603, includes an accelerator inputter instead of the accelerator device 604, and includes a deceleration inputter instead of the brake device 605, for example. An operator operates the acceleration inputter instead of the accelerator device 604 in accelerating the hull, and operates the deceleration inputter instead of the brake device 605 in decelerating the hull. In this case, the hull corresponds to a main movable body, the motor corresponds to a power source, and the screw corresponds to a driver. In such a configuration, the motor converts electric power from the battery system 500 into power upon receipt of the electric power, and the screw is rotated with the power so that the full moves.

Similarly, the airplane, which is loaded with the battery system 500, includes an airframe instead of the vehicle body 610 illustrated in Fig. 17, includes a propeller instead of the drive wheel 603, includes an acceleration inputter instead of the accelerator device 604, and includes a deceleration inputter instead of the brake device 605, for example. In this case, the airframe corresponds to a main movable body, the motor corresponds to a power source, and the propeller corresponds to a driver. In such a configuration, the motor converts electric power from the battery system 500 into power, and the propeller is rotated with the electric power so that the airframe moves.

The elevator, which is loaded with the battery system 500, includes a cage instead of the vehicle body 610 illustrated in Fig. 17, includes a hoist rope, which is attached to the cage, instead of the drive wheel 603, includes an accelerator inputter instead of the accelerator device 604, and includes a deceleration inputter instead of the brake device 605, for example. In this case, the cage corresponds to a main movable body, the motor corresponds to a power source, and the hoist rope corresponds to a driver. In such a configuration, the motor converts electric power from the battery system 500 into power upon receipt of the electric power, and the hoist rope is wound up with the power so that the cage moves up and down.

The walking robot, which is loaded with the battery system 500, includes a body instead of the vehicle body 610 illustrated in Fig. 17, includes a foot instead of the drive wheel 603, includes an acceleration inputter instead of the accelerator device 604, and includes a deceleration inputter instead of the brake device 605, for example. In this case, the body corresponds to a main movable body, the motor corresponds to a power source, and the foot corresponds to a driver. In such a configuration, the motor converts electric power from the battery system 500 into power upon receipt of the electric power, and the foot is driven with the power so that the body moves.

Thus, in the movable body, which is loaded with the battery system 500, a power source converts the electric power from the battery system 500 into power, and the driver moves the main movable body with the power obtained in the conversion by the power source.

(5) Fifth Embodiment

A power supply device according to a fifth embodiment of the present invention will be described below.

(5-1) Overall Configuration

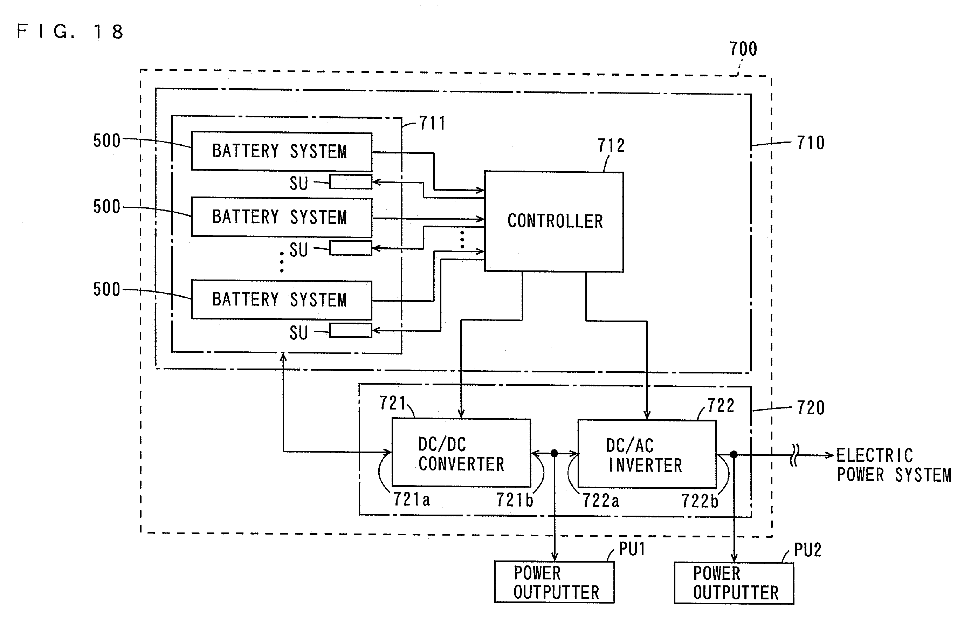

Fig. 18 is a block diagram illustrating a configuration of a power supply device according to the fifth embodiment. As illustrated in Fig. 18, a power supply device 700 includes a power storage device 710 and a power conversion device 720. The power storage device 710 includes a battery system group 711 and a controller 712. The battery system group 711 includes a plurality of battery systems 500, and a plurality of switching units SU respectively corresponding to the plurality of battery systems 500. Each of the battery systems 500 has a similar configuration to that of the battery system 500 illustrated in Fig. 1. The plurality of battery systems 500 may be connected in parallel, or may be connected in series. When each of the switching units SU is turned on, the corresponding battery system 500 is electrically connected to the other battery system 500. When each of the switching units SU is turned off, the corresponding battery system 500 is electrically separated from the other battery system 500.

The controller 712 is an example of a system controller, and includes a CPU and a memory, or a microcomputer, for example. The controller 712 is connected to the battery ECUs 101 (Fig. 1) in the battery systems 500 and the switching units SU. A battery control value is given to the controller 712 from the battery ECU 101 in each of the battery systems 500. The controller 712 performs control relating to discharge or charge of the plurality of battery cells included in each of the battery systems 500 by controlling the power conversion device 720 and each of the switching units SU based on the battery control value given from the battery ECU 101.

The power conversion device 720 includes a DC/DC (direct current/direct current) converter 721 and a DC/AC (direct current/alternating current) inverter 722. The DC/DC converter 721 has input/output terminals 721a and 721b, and the DC/AC inverter 722 has input/output terminals 722a and 722b. The input/output terminal 721a of the DC/DC converter 721 is connected to the battery system group 711 in the power storage device 710. The input/output terminal 721b of the DC/DC converter 721 and the input/output terminal 722a of the DC/AC inverter 722 are connected to each other while being connected to an electric power outputter PU1. The input/output terminal 722b of the DC/AC inverter 722 is connected to an electric power outputter PU2 while being connected to another electric power system. Each of the electric power outputters PU1 and PU2 has an outlet, for example. Various loads, for example, are connected to the electric power outputters PU1 and PU2. The other electric power system includes a commercial power supply or a solar battery, for example. The electric power outputters PU1 and PU2 and the other electric power system are examples of an external object connected to the power supply device.

The controller 712 controls the DC/DC converter 721 and the DC/AC inverter 722 so that the battery system group 711 is discharged and charged.

When the battery system group 711 is discharged, the DC/DC converter 721 performs DC/DC (direct current/ direct current) conversion of electric power fed from the battery system group 711, and the DC/AC inverter 722 further performs DC/AC (direct current/alternating current) conversion thereof.

Electric power obtained in the DC/DC conversion by the DC/DC converter 721 is supplied to the electric power outputters PU1. Electric power obtained in the DC/AC conversion by the DC/AC inverter 722 is supplied to the electric power outputter PU2. DC electric power is output to the external object from the electric power outputter PU1, and AC electric power is output to the external object from the electric power outputter PU2. AC electric power obtained in the conversion by the DC/AC inverter 722 may also be supplied to another electric power system.

The controller 712 performs the following control as an example of control relating to discharge of the plurality of battery cells 10 included in each of the battery systems 500. When the battery system group 711 is discharged, the controller 712 determines whether discharge of the battery system group 711 is stopped based on the battery control value from each of the battery ECUs (Fig. 1), and controls the power conversion device 720 based on a determination result. More specifically, when the charged capacity of any one of the plurality of battery cells 10 (Fig. 1) included in the battery system group 711 becomes smaller than a predetermined threshold value, the controller 712 controls the DC/DC converter 721 and the DC/AC inverter 722 so that the discharge of the battery system group 711 is stopped or the discharging current (or discharging electric power) is limited. Thus, each of the battery cells 10 is prevented from being overdischarged.

On the other hand, when the battery system group 711 is charged, the DC/AC inverter 722 performs AC/DC (alternating current/direct current) conversion of AC electric power fed from another electric power system, and the DC/DC converter 721 further performs DC/DC (direct current/direct current) conversion thereof. Electric power is fed from the DC/DC converter 721 to the battery system group 711 so that the plurality of battery cells 10 (Fig. 1) included in the battery system group 711 are charged.

The controller 712 performs the following control as an example of control relating to charge of the plurality of battery cells 10 included in each of the battery systems 500. When the battery system group 711 is charged, the controller 712 determines whether the charge of the battery system group 711 is stopped based on the battery control value from each of the battery ECUs (Fig. 1), and controls the power conversion device 720 based on a determination result. More specifically, when the charged capacity of any one of the plurality of battery cells 10 (Fig. 1) included in the battery system group 711 becomes larger than a predetermined threshold value, the controller 712 controls the DC/DC converter 721 and the DC/AC inverter 722 so that the charge of the battery system group 711 is stopped or the charging current (or charging electric power) is limited. Thus, each of the battery cells 10 is prevented from being overcharged.

If electric power can be supplied between the power supply device 700 and the external object, the power conversion device 720 may include only either one of the DC/DC converter 721 and the DC/AC inverter 722. If electric power can be supplied between the power supply device 700 and the external object, the power conversion device 720 need not be provided.

If the communication lines D2 and D3 (Fig. 1) in any one of the battery systems 500 may be disconnected, a communication line disconnection signal is fed to the controller 712 from the battery ECU 101 (Fig. 1) in the battery system 500.

More specifically, if a first counter value reaches a predetermined value T1 in step S53 illustrated in Fig. 13, the control value calculator 211 (Fig. 1) feeds the communication line disconnection signal to the controller 712. The controller 712 specifies the battery system 500 in which the communication lines D2 and D3 may be disconnected (hereinafter referred to as the defective battery system 500) based on the fed communication line disconnection signal.

The controller 712 causes a presentation unit (not illustrated) to present the specified defective battery system 500 to the user. The presentation unit includes a liquid crystal display and a speaker, for example, and visually and acoustically presents the defective battery system 500 to the user. Thus, the user can quickly recognize that the defective battery system 500 occurs, and can quickly maintain the defective battery system 500.

The controller 712 may turn off the switching unit SU corresponding to the defective battery system 500. In this case, the defective battery system 500 is electrically separated from the other battery system 500. Thus, the other battery system 500 can be continuously used while reliably preventing the defective battery system 500 from being overdischarged and overcharged.

If the defective battery system 500 is electrically separated from the other battery system 500 when the battery system group 711 is charged, the controller 712 may control the power conversion device 720 so that electric power fed to the battery system group 711 from the external object decreases by an amount corresponding to the defective battery system 500. In this case, the other battery system 500 is prevented from being overcharged.

Similarly, if the defective battery system 500 is electrically separated from the other battery system 500 when the battery system group 711 is discharged, the controller 712 may control the power conversion device 720 so that electric power fed from the battery system group 711 to the external object decreases by an amount corresponding to the defective battery system 500. In this case, the other battery system 500 is prevented from being overdischarged.

In the battery control device 400 (Fig. 1) in each of the battery systems 500, the battery control value can be calculated using the calculation voltage even if the communication lines D2 and D3 are disconnected. Thus, the defective battery system 500 can be continuously used without being repaired.

(5-2) Installation of Battery System

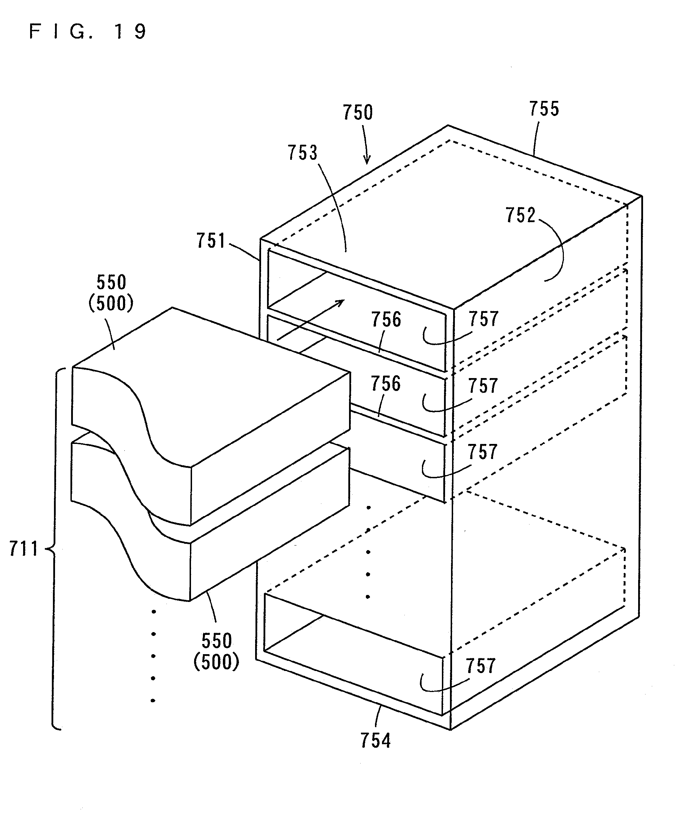

In the present embodiment, the plurality of battery systems 500 are housed in a common rack. Fig. 19 is a perspective view of the rack that houses the plurality of battery systems 500.

As illustrated in Fig. 19, a rack 750 includes side surface portions 751 and 752, an upper surface portion 753, a bottom surface portion 754, a back surface portion 755, and a plurality of partition portions 756. The side surface portions 751 and 752 vertically extend parallel to each other. The upper surface portion 753 horizontally extends to connect upper ends of the side surface portions 751 and 752, and the bottom surface portion 754 horizontally extends to connect lower ends of the side surface portions 751 and 752. The back surface portion 755 vertically extends perpendicularly to the side surface portions 751 and 752 along one side of the side surface portion 751 and one side of the side surface portion 752. The plurality of partition portions 756 are equally spaced apart from one another parallel to the upper surface portion 753 and the bottom surface portion 754 between the upper surface portion 753 and the bottom surface portion 754. A plurality of housing spaces 757 are provided among the upper surface portion 753, the plurality of partition portions 756, and the bottom surface portion 754. Each of the housing spaces 757 opens toward a front surface of the rack 750 (a surface opposite to the back surface portion 755).

The battery system 500 illustrated in Fig. 1 is housed in a box-shaped casing 550. The casing 550 that houses the battery system 500 is housed in each of the housing spaces 757 from the front surface of the rack 750.

All the battery systems 500 may be housed in one rack 750, or may be separately housed in a plurality of racks 750. All the battery systems 500 may be individually installed without being housed in the rack 750.

To easily maintain the battery system 500, each of the battery systems 500 is preferably provided with a service plug that shuts off a current path. If each of the battery systems 500 includes four battery modules 100 (Fig. 1), for example, the service plug is provided between the two battery modules 100 connected in series and the other two battery modules 100 connected in series. The service plug is turned on so that the four battery modules 100 are connected in series. On the other hand, the service plug is turned off so that the two battery modules 100 and the other two battery modules 100 are electrically separated from each other. Thus, a current path between the plurality of battery modules 100 is shut off. Therefore, the battery system 500 can be maintained easily and safely.

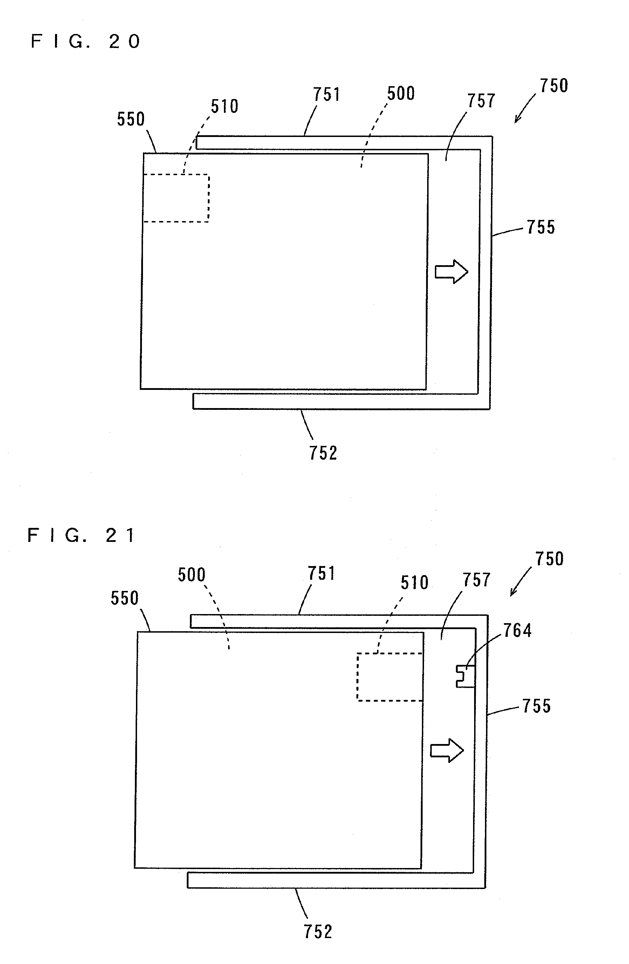

Fig. 20 is a diagram illustrating an arrangement example of a service plug. In the example illustrated in Fig. 20, a service plug 510 is provided along one side surface of a casing 550 positioned on a front surface of a rack 750. In this case, a user can switch ON and OFF of the service plug 510 from the front surface of the rack 750 with a battery system 500 housed in a housing space 757. As a result, the battery system 500 can be easily and safely maintained.

Fig. 21 is a diagram illustrating another arrangement example of a service plug. In the example illustrated in Fig. 21, a service plug 510 is provided along one side surface of a casing 550 opposite to a back surface portion 755 in a rack 750. In the back surface portion 755 in the service plug 510, an ON/OFF switcher 764 is provided at a position that overlaps the service plug 510. In this case, a battery system 500 is housed in a housing space 757 in the rack 750 so that the service plug 510 is connected to the ON/OFF switcher 764, and the service plug 510 is turned on. On the other hand, the battery system 500 is taken out of the housing space 757 in the rack 750 so that the service plug 510 and the ON/OFF switcher 764 are separated from each other, and the service plug 510 is turned off.

Thus, a current path between the plurality of battery modules 100 is shut off with the battery system 500 not housed in the housing space 757 in the rack 750. Therefore, the battery system 500 can be easily and safely maintained.

(5-3) Effects

In the power supply device 700 according to the present embodiment, the controller 712 performs control relating to discharge or charge of the battery system group 711 based on the battery control value from each of the battery systems 500. Thus, each of the battery cells 10 included in the battery system group 711 can be prevented from being overdischarged and overcharged.

In each of the battery systems 500, even if the communication lines D2 and D3 are disconnected, for example, the battery control value can be calculated based on the current value at the time of charge/discharge. Therefore, the reliability of the power supply device 700 is improved.

(5-4) Another Example of Power Supply Device

In the power supply device 700 illustrated in Fig. 18, the controller 712 may have a similar function to that of the battery ECU 101 instead of providing each of the battery systems 500 with the battery ECU 101. In this case, the controller 712 is connected to the range determiner 201 and the voltage detector 202 in each of the battery modules 100 in each of the battery systems 500 while being connected to the current sensor 103 in the battery system 500. The controller 712 calculates a battery control value using the detection voltage or the calculation voltage, and performs control relating to discharge or charge of the battery system group 711 based on the calculated battery control value. Thus, a configuration of each of the battery systems 500 is simplified.

In the power supply device 700 illustrated in Fig. 18, the battery system 500 illustrated in Fig. 1 may be replaced with the battery system 500a illustrated in Fig. 15. In this case, the plurality of range determiners 201a can simultaneously determine voltage ranges of the plurality of battery cells 10. Thus, a period of time required to determine the voltage ranges can be significantly shortened.

In the power supply device 700 illustrated in Fig. 18, the battery system 500 illustrated in Fig. 1 may be replaced with the battery system 500b illustrated in Fig. 16. In this case, charge/discharge control of each of the battery cells 10 can be performed with sufficient precision while preventing the battery control device 400b from becoming complex in configuration and increasing in cost. More specifically, the precision of the charge/discharge control of each of the battery cells 10 can be prevented from decreasing as compared with when an A/D converter or the like capable of detecting a terminal voltage of each of battery cells 10 with high precision is used. Therefore, the cost of the power supply device 700 can be reduced.

(6) Another Embodiment

As each of constituent elements in the claims, other types of constituent elements having configurations or functions described in the claims can be used in addition to the constituent elements described in the above-mentioned first to fifth embodiments.

(6-1) While in the range determiner 201 according to the above-mentioned embodiment, the terminal voltages V1 and V2 of the battery cells 10 are fed to the comparator 223 after the capacitor C1 is charged with the terminal voltages V1 and V2, the present invention is not limited to this. If a temporal change in the terminal voltages V1 and V2 of the battery cells 10 is small, the terminal voltages V1 and V2 of the battery cells 10 may be directly fed to the comparator 223. In this case, the switching elements SW21, SW22, SW31, SW32, and the capacitor C1 are not required. Thus, the switching elements SW21, SW22, SW31, and SW32 need not be switched, and the capacitor C1 need not be charged. Therefore, a period of time required to determine voltage ranges can be further shortened.

(6-2) In the above-mentioned embodiments, the control value calculator may calculate any of an SOC, a remaining capacity, a depth of discharge (DOD), a current accumulated value, and a difference in amount of stored electric charges of each of the battery cells 10 as a battery control value.

The DOD is the ratio of a chargeable capacity (a capacity obtained by subtracting the remaining capacity of the battery cell 10 from the full charging capacity thereof) to the full charging capacity of the battery cell 10. The difference in amount of stored electric charges is a difference between the SOC at the current time point and a predetermined reference SOC (e.g., SOC 50 [%]).

[Industrial Applicability]

The present invention is applicable to various movable bodies, a power storage device, a mobile equipment, and others using electric power as a driving source.

**Claims**

1. A battery control device for performing charge/discharge control of a plurality of battery cells, comprising:

   a voltage calculator that calculates, based on currents respectively flowing through said plurality of battery cells, a terminal voltage of each of the battery cells; and
   a control value calculator that calculates a control value for controlling charge/discharge of said plurality of battery cells using the terminal voltage calculated by said voltage calculator.

2. The battery control device according to claim 1, further comprising
   a voltage detector that detects a terminal voltage of each of said plurality of battery cells, and
   a controller that includes said voltage calculator and said control value calculator, and is connected to said voltage detector via a communication line,
   said control value calculator calculates said control value using one of the terminal voltage detected by said voltage detector and the terminal voltage calculated by said voltage calculator.

3. The battery control device according to claim 2, wherein said control value calculator calculates said control value using the terminal voltage calculated by said voltage calculator when it cannot receive the terminal voltage detected by said voltage detector.

4. The battery control device according to claim 1, further comprising a range determiner that determines whether the terminal voltage of each of said plurality of battery cells belongs to a predetermined voltage range,
   wherein said voltage calculator corrects the terminal voltage of each of the battery cells based on a determination result by said range determiner.

5. The battery control device according to claim 4, wherein said range determiner determines whether the terminal voltage of each of the battery cells belongs to said voltage range based on a comparison result between a reference voltage and the terminal voltage of the battery cell.

6. A battery system comprising:

   a plurality of battery cells; and
   the battery control device according to claim 1 for performing charge/discharge control of said plurality of battery cells.

7. An electric vehicle comprising:

   a plurality of battery cells;
   the battery control device according to claim 1 for performing charge/discharge control of said plurality of battery cells;
   a motor that is driven with electric power from said plurality of battery cells; and
   a drive wheel that rotates with a torque generated by said motor.

8. A movable body comprising:

the battery system according to claim 6;

a main movable body;

a power source that converts electric power from said battery system into drive power upon receipt of the electric power; and

a driver that moves said main movable body with the drive power obtained in the conversion by said power source.

9. A power storage device comprising:

the battery system according to claim 6; and

a system controller that performs control relating to charge or discharge of said plurality of battery cells in said battery system.

10. A power supply device connectable to an external object, comprising:

the power storage device according to claim 9; and

a power conversion device that is controlled by said system controller in said power storage device and converts electric power between said plurality of battery cells in said power storage device and said external object.

FIG. 1

F I G. 2

FIG. 3

EP 2 546 948 A1

F I G. 4

START

SET SWITCHING ELEMENTS TO
ST1, ST2, AND ST3 IN THIS ORDER — S9-1

ACQUIRE COMPARISON RESULT
L11 (0 or 1) OF Vref1 AND V1 — S9-2

SET SWITCHING ELEMENT TO ST4 — S9-3

ACQUIRE COMPARISON RESULT
L12 (0 or 1) OF Vref2 AND V1 — S9-4

SET SWITCHING ELEMENTS TO
ST5, ST6, ST7, AND ST8
IN THIS ORDER — S9-5

ACQUIRE COMPARISON RESULT
L22 (0 or 1) OF Vref2 AND V2 — S9-6

SET SWITCHING ELEMENT TO ST9 — S9-7

ACQUIRE COMPARISON RESULT
L21 (0 or 1) OF Vref1 AND V2 — S9-8

SET SWITCHING ELEMENT TO ST10 — S9-9

DETERMINE VOLTAGE RANGES (L1, L2) — S9-10

END

FIG. 5

| STATE | SW01 | SW02 | SW11 | SW12 | SW21 | SW22 | SW31 | SW32 | SW100 | |
|---|---|---|---|---|---|---|---|---|---|---|
| ST1 | ON | OFF | ON | OFF | ON | ON | OFF | OFF | CP2 | CHARGE C1 WITH V1 |
| ST2 | ON | OFF | ON | OFF | OFF | OFF | OFF | OFF | CP2 | INSULATE C1 |
| ST3 | ON | OFF | ON | OFF | OFF | OFF | ON | ON | CP2 | COMPARE Vref1 WITH VOLTAGE OF C1 |
| ST4 | ON | OFF | ON | OFF | OFF | OFF | ON | ON | CP3 | COMPARE Vref2 WITH VOLTAGE OF C1 |
| ST5 | OFF | OFF | OFF | OFF | OFF | OFF | OFF | OFF | CP3 | INSULATE C1 INSULATE CELL |
| ST6 | OFF | ON | OFF | ON | ON | ON | OFF | OFF | CP3 | CHARGE C1 WITH V2 |
| ST7 | OFF | ON | OFF | ON | OFF | OFF | OFF | OFF | CP3 | INSULATE C1 |
| ST8 | OFF | ON | OFF | ON | OFF | OFF | ON | ON | CP3 | COMPARE Vref2 WITH VOLTAGE OF C1 |
| ST9 | OFF | ON | OFF | ON | OFF | OFF | ON | ON | CP2 | COMPARE Vref1 WITH VOLTAGE OF C1 |
| ST10 | OFF | OFF | OFF | OFF | OFF | OFF | OFF | OFF | CP2 | INSULATE C1 INSULATE CELL |

EP 2 546 948 A1

F I G. 6

VOLTAGE RANGE

2
1
0
　Vref1　Vref2　TERMINAL VOLTAGE OF
　　　　　　　　BATTERY CELL

F I G. 7

| Ln1 | Ln2 | Ln | |
|-----|-----|----|---|
| 0 | 0 | 0 | Vn<Vref1 |
| 1 | 0 | 1 | Vref1≦Vn<Vref2 |
| 1 | 1 | 2 | Vn≧Vref2 |
| 0 | 1 | — | IMPOSSIBLE (OCCUR WHEN CIRCUIT IS BROKEN DOWN) |

27

F I G. 8

F I G. 9

START BATTERY SYSTEM
(TURN ON IGNITION KEY)

S1
RESET CURRENT ACCUMULATED VALUE

S2
ACQUIRE SOC VALUE OF
EACH BATTERY CELL

(B) →

S3
SET TIMER (t = 0)

S4
ACQUIRE VALUE OF CURRENT

S5
CALCULATE CURRENT
ACCUMULATED VALUE

S6
CALCULATE SOC BASED ON
CURRENT ACCUMULATED VALUE

S7
ESTIMATE OCV FROM SOC

S8
ESTIMATE TERMINAL VOLTAGE
OF BATTERY CELL

(A)

F I G.  1 0

$$\text{A}$$

TRANSMIT VOLTAGE RANGE
ACQUISITION SIGNAL — S9

DETERMINATION
RESULT OF VOLTAGE RANGE
IS RECEIVED? — S10    No

Yes

VOLTAGE RANGE = 1? — S11    No

Yes

CORRECT TERMINAL VOLTAGE — S12

CORRECT OCV BASED ON
CORRECTED TERMINAL VOLTAGE — S13

CORRECT SOC BASED ON
CORRECTED OCV — S14

RESET CURRENT
ACCUMULATED VALUE — S15

FEED TERMINAL VOLTAGE TO
CONTROL VALUE CALCULATOR — S16

$t \geqq T$? — S17    No

Yes

$$\text{B}$$

F I G. 1 1

```
┌────────────────────────────┐
│    TURN OFF IGNITION KEY    │
└────────────────────────────┘
              │
              ▼           S20
┌────────────────────────────┐
│     STORE SOC OF EACH       │
│       BATTERY CELL          │
└────────────────────────────┘
              │
              ▼
┌────────────────────────────┐
│     STOP BATTERY SYSTEM     │
└────────────────────────────┘
```

EP 2 546 948 A1

F I G. 1 2

OCV (i) [V]

SOC (i) [%]

FIG. 13

```
        ┌────────────────────────────┐
        │       START SYSTEM          │
        │   (TURN ON IGNITION KEY)    │
        └────────────────────────────┘
                     │
                     ▼            ┌─S51
        ┌────────────────────────────┐
        │  RESET FIRST AND SECOND     │
        │      COUNTER VALUES         │
        └────────────────────────────┘
                     │
                     ▼            ┌─S52
        ┌────────────────────────────┐
        │        RESET TIMER          │
        └────────────────────────────┘
                     │
                     ▼            ┌─S53
              ╱───────────────╲
             ╱    FIRST         ╲   Yes
            ⟨ COUNTER VALUE HAS  ⟩──────► ⓓ
             ╲   REACHED T1?    ╱
              ╲───────────────╱
                     │ No
                     ▼            ┌─S54
              ╱───────────────╲
    No       ╱   DETECTION      ╲
   ◄────────⟨ VOLTAGE HAS BEEN   ⟩
             ╲   RECEIVED?      ╱
              ╲───────────────╱
                     │ Yes
    ┌─S59             ┌─S55
┌──────────────┐  ┌──────────────────┐
│ MAINTAIN Vp  │  │  UPDATE Vp TO     │
│              │  │ DETECTION VOLTAGE │
└──────────────┘  └──────────────────┘
        │                │
    ┌─S60             ┌─S56
┌──────────────┐  ┌──────────────────┐
│ ADD ONE TO   │  │  RESET FIRST      │
│ FIRST COUNTER│  │  COUNTER VALUE    │
│    VALUE     │  │                   │
└──────────────┘  └──────────────────┘
        │                │        ◄────── ⓔ
        └────────┬───────┘
                 ▼            ┌─S57
        ┌────────────────────────────┐
        │   CALCULATE BATTERY         │
        │  CONTROL VALUE USING Vp     │
        └────────────────────────────┘
                 │
                 ▼            ┌─S58
          ╱───────────────╲
         ╱   MEASUREMENT    ╲   No
        ⟨  TIME HAS REACHED  ⟩────►
         ╲       T2?        ╱
          ╲───────────────╱
                 │ Yes
```

33

F I G. 1 4

D

S61

SECOND
COUNTER VALUE
HAS REACHED
T3?

Yes

No

S62

CALCULATE
VOLTAGE HAS BEEN
ACQUIRED?

No

Yes

S65

MAINTAIN Vp

S63

UPDATE Vp TO
CALCULATION VOLTAGE

S67

TURN OFF CONTACTOR

S66

ADD ONE TO SECOND
COUNTER VALUE

S64

RESET SECOND
COUNTER VALUE

END

E

F I G . 1 5

FIG. 16

EP 2 546 948 A1

EP 2 546 948 A1

F I G .  1 7

FIG. 18

EP 2 546 948 A1

FIG. 19

F I G. 2 0

F I G. 2 1

<table>
<tr><td colspan="2" align="center">**INTERNATIONAL SEARCH REPORT**</td><td>International application No.<br>PCT/JP2011/001287</td></tr>
</table>

**A. CLASSIFICATION OF SUBJECT MATTER**

*H02J7/00*(2006.01)i, *B60L11/18*(2006.01)i, *H01M10/48*(2006.01)i, *H02J7/10* (2006.01)i

According to International Patent Classification (IPC) or to both national classification and IPC

**B. FIELDS SEARCHED**

Minimum documentation searched (classification system followed by classification symbols)
H02J7/00, B60L11/18, H01M10/48, H02J7/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2009-42176 A (Toyota Motor Corp.),<br>26 February 2009 (26.02.2009),<br>paragraphs [0055] to [0058]; fig. 2<br>& US 2009/0039831 A1 & CN 101362442 A | 1,6-10<br>2,3 |
| Y | JP 11-135159 A (Japan Storage Battery Co.,<br>Ltd.),<br>21 May 1999 (21.05.1999),<br>paragraphs [0015] to [0024]; fig. 1, 5, 6<br>(Family: none) | 2,3 |
| A | JP 2004-134221 A (Nissan Motor Co., Ltd.),<br>30 April 2004 (30.04.2004),<br>fig. 6<br>(Family: none) | 4,5 |

☐ Further documents are listed in the continuation of Box C.  ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>17 May, 2011 (17.05.11) | Date of mailing of the international search report<br>31 May, 2011 (31.05.11) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2000173674 A